Europäisches Patentamt

European Patent Office

Office européen des brevets

(11) Publication number: **0 259 912 B1**

## EUROPEAN PATENT SPECIFICATION

(45) Date of publication of patent specification: **16.10.91**   (51) Int. Cl.5: **G06F 11/14**

(21) Application number: **87201556.5**

(22) Date of filing: **18.08.87**

(54) **File backup facility for a community of personal computers.**

(30) Priority: **12.09.86 GB 8622010**

(43) Date of publication of application:
**16.03.88 Bulletin 88/11**

(45) Publication of the grant of the patent:
**16.10.91 Bulletin 91/42**

(84) Designated Contracting States:
**DE FR GB**

(56) References cited:

**DATABASE AND NETWORK JOURNAL, vol.
16, no. 2, 1986, pages 12-13, London, GB;
"The 3+ network family"**

**PROCEEDINGS OF DESTRIBUTED COMPUT-
ING, FALL COMPCON 80, 21st IEEE COM-
PUTER SOCIETY INTERNATIONAL CONFER-
ENCE, Washinton, D.C., 23rd-25th September
1980, pages 101-107, IEEE, US; T.M. RYAN:
"Backup and recovery for distributed inter-
active computer systems"**

(73) Proprietor: **Hewlett-Packard Limited
Nine Mile Ride
Wokingham, Berkshire RG11 3LL(GB)**

(72) Inventor: **Bartlett, Paul
28 Monk Road
Bishopton Bristol BS7 8LE(GB)**
Inventor: **Lieske, Steven
24 Cedar Hall
Frenchay Bristol(GB)**
Inventor: **Simms, Mark
30 Codrington Road
Bishopston Bristol BS7 8ET(GB)**
Inventor: **Hains, Tracey
9 Seyton Walk
Stoke Gifford Bristol BS12 6UW(GB)**
Inventor: **Walker, Patrick
4 Manor Close
Tockington Bristol BS12 4NT(GB)**
Inventor: **Winsborrow, Lesley
3 Adringal Cottages Horton
Chipping Sodbury Bristol BS17 6QP(GB)**

(74) Representative: **Squibbs, Robert Francis
Hewlett-Packard Limited Cain Road
Bracknell, Berkshire RG12 1HN(GB)**

Note: Within nine months from the publication of the mention of the grant of the European patent, any person
may give notice to the European Patent Office of opposition to the European patent granted. Notice of opposition
shall be filed in a written reasoned statement. It shall not be deemed to have been filed until the opposition fee
has been paid (Art. 99(1) European patent convention).

EP 0 259 912 B1

SOFTWARE-PRACTICE AND EXPERIENCE, vol. 15, no. 9, September 1985, pages 889-899, John Wiley & Sons, Ltd, Chichester, GB; R.J. DAKIN et al.: "A large scale network storage facility"

DIGEST OF PAPERS OF THE SPRING COMPCON 85, 30th IEEE COMPUTER SOCIETY INTERNATIONAL CONFERENCE, San Francisco, 25th-28th February 1985, pages 144-147, IEEE, US; B. EISENHARD: "Network disk and file servers"

## Description

The present invention relates to the backing up of files in a personal-computer community made up of a plurality of independently-operable personal computers communicating with a central station. In the present context, the term 'personal computer' is intended to mean an independently-operable computer work station arranged to operate under a file-based operating system to store and retrieve working files from a non-volatile storage area (floppy disc, hard disc or virtual disc) associated with that personal computer.

As is well know, it is customary to refer to different copies of the same computer file in terms of the function served by that copy. Thus, the copy of a file that is used on a day-to-day basis for computer processing purposes is referred to as the working copy. For reasons of data integrity, it is good practice to keep a relatively up-to-date copy of the working file to mitigate against the worst consequences of destruction of the working copy; this second copy is known as a backup copy. A third type of copy, known as an archive copy, may be used to store past, no longer current, versions of the file for record and other purposes.

The present invention relates to the taking of backup copies of the working files of a personal computer.

For backup copies to be an effective means of preserving data integrity, such copies must be taken regularly. A new computer user is usually difficult to convince that the time and effort involved in making backup copies is worthwhile - at least until the user suffers his or her first massive loss of data. Even experienced computer users are not well disciplined in taking backup copies. This is particularly true where the user has been used to working at a mainframe terminal where backup is the mainframe operators responsibility and not that of the individual user; the replacement of the terminal with a personal computer requires the user to take over the responsibility for data integrity and backup.

Added to the problem of educating users to be responsible for taking backup copies when operating personal computers, are the dis-incentives to performing backup that are dependent on the backup method used; such dis-incentives include length of time taken and cost of equipment required. Thus for example, backing up a hard disc by means of copying files to floppy discs, is generally unacceptable due to the time taken in terms of continual user intervention in swapping floppy discs. A much more suitable method for backing up the hard disc of a personal computer is to use a local tape device, often referred to as a tape streamer; however, the disadvantage of this solution is the high cost of providing a tape streamer for each computer (or alternatively, the inconvenience of transporting the streamer between a number of computers).

The document DATABASE AND NETWORK JOURNAL, Vol. 16, No. 2, 1986, pages 12-13, London, GB; "The 3+ network family" describes a personal computer community providing a file backup for the personal computers. The system comprises a plurality of independently operable personal computers, a central mainframe and a communications arrangement between the personal computers and the mainframe and provides a backup and a restore mode for the files. The system of this document does not disclose a concurrent backup request from several personal computers with the files subject to being divided into blocks interleaved for storage on the storage device of the mainframe.

The document DIGEST OF PAPERS OF THE SPRING COMPCON 85, 30th IEEE COMPUTER SOCIETY INTERNATIONAL CONFERENCE, San Francisco, 25th-28th February 1985, pages 144-147, IEEE, US; B. EISENHARD: "Network disk and file servers" relates to personal computers network system providing backup servers to backup data onto video tape. Dual processors control the placement of data onto video tape. One processor is dedicated to translation of the video data stream, and the second processor reads or writes data over the network to a target disk server.

It is an object of the present invention to provide a backup facility for a community of personal computers which is both convenient to use and relatively inexpensive.

According to the present invention, there is provided a personal-computer commonly comprising a plurality of independently-operable personal computers, a central station, and a communications arrangement communicating each personal computer with the central station, each personal computer being arranged to operate under a file-based operating system to store and retrieve working files from a non-volatile storage area associated with that personal computer, the operating system maintaining a directory of said files and in order to provide a file backup facility for personal computers:

- the central station is provided with a mass storage device,
- each personal computer is operative
  a) in a backup mode, to enable user-selection of files for backup and to transmit the selected files to the central station, and
  b) in a restore mode, to enable user-selection of files to be restored from backup, to request and receive the files selected for restore from the central station, and to update the operating system file directory with an entry corresponding to each restored file; and

- the central station is arranged to store files transmitted thereto in said mass storage device and to return selected files when so requested;

said central station comprising a multi-tasking computer characterized by being operative to handle the file backup requirements of several said personal computers concurrently and to transfer files to said mass storage device in the central station in the form of blocks of data of predetermined maximum size, the central station when backing up several personal computers concurrently interleaving blocks from files of different personal computers.

This arrangement enables a plurality of personal computers to use a single resource for concurrently backing up files.

Advantageously, each personal computer is arranged to keep a backup directory of files backed up, this directory being accessible to a user to facilitate the selection of files for restore.

In order to avoid backing up files which have not been changed since they were last backed up, the backup directory is arranged to store file version data. If backup of the same file is subsequently requested, this version data is used to check whether any changes have been made to the file since its last backup.

## BRIEF DESCRIPTION OF THE DRAWINGS

A file backup facility embodying the invention and for use in a community of personal computers, will now be described, by way of non-limiting example, with reference to the accompanying drawings, in which:

Figure 1
is a schematic representation of the personal computer community showing three personal computers each running a requestor program and linked to a central station running a server program;

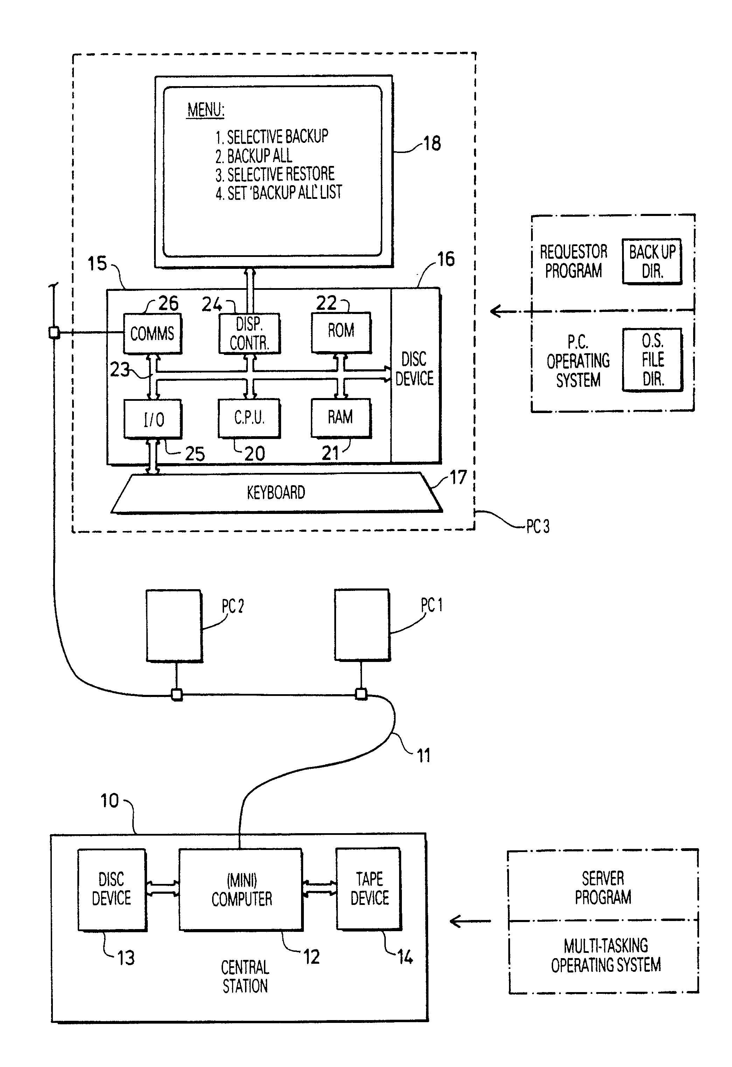

Figure 2
is a diagrammatic representation of a tree-structured directory such as used by the personal computers of Figure 1;

Figure 3
is a diagram depicting the data structures making up a backup directory held by each personal computer;

Figure 4
is a diagram illustrating an inter-active file selection process forming part of the requestor program;

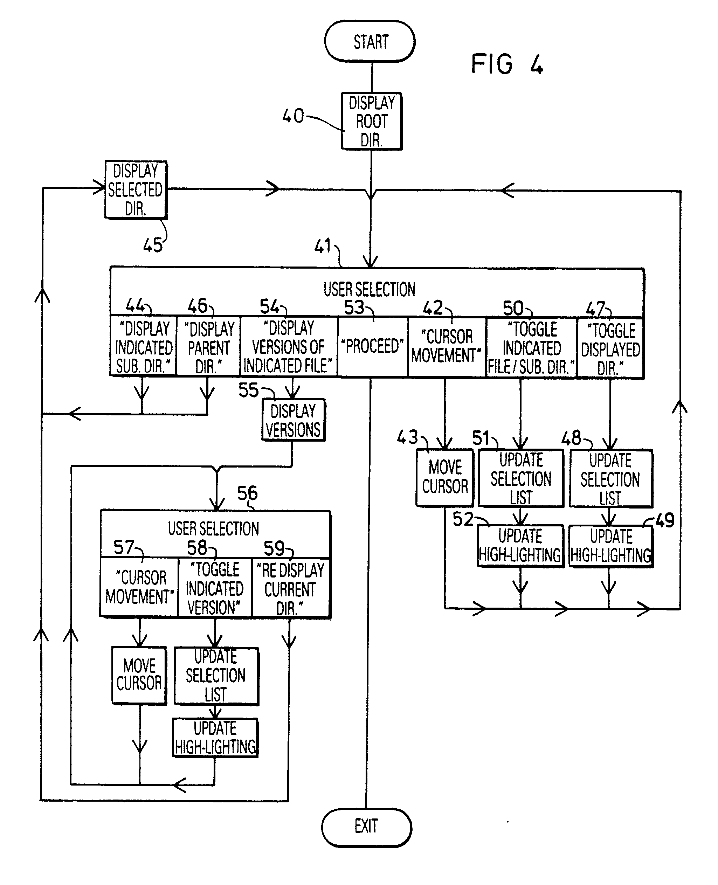

Figure 5
is a diagram depicting the data structures making up a file selection list generated in response to user inputs in the Figure 4 selection process;

Figure 6
is a flow chart of a requestor-program algorithm for changing in the file selection list, the selection status of all files in a particular sub-directory;

Figure 7
is a flow chart of a requestor-program algorithm for changing, in the file selection list, the selection status of a particular file;

Figure 8
is a flow chart of a requestor-program algorithm for interrogating the selection list to derive the selection status of a particular file;

Figure 9
is a flow chart illustrating the overall operation of the requestor program in backing up a selection of files to the central station;

Figure 10
is a flow chart of a requestor-program algorithm for checking the current/noncurrent status of files listed in the backup directory;

Figure 11
is a flow chart illustrating the overall operation of the requestor program in restoring a selection of files from the central station;

Figure 12
is a diagram illustrating the main processes, tasks and data structures of the server program run by the central station;

Figure 13
is a flow chart illustrating the main functions of a scheduler process of the server program;

Figure 14
is a flow chart illustrating the general form of a backup task and also of a restore task of the server program;

Figure 15
is a flow chart outlining the main functions of a tape handler process of the server program;

Figure 16A,B
are flow charts of two routines characterising a said backup task; and

Figures 17A,B
are flow charts of two routines characterising a said restore task.

## DESCRIPTION OF THE PREFERRED EMBODIMENT

Shown in Figure 1 is a community of personal computers (PCs) referenced PC1, PC2 and PC3 which are linked to a central station 10 via a local area network (LAN) 11 of any suitable form, including point-to-point and clustered configurations.

The central station 10 comprises in the present example, a mini computer 12 and its associated peripheral devices including a hard disc storage device 13 and a low-cost mass storage device 14 here constituted by a tape storage device. The mini computer operates under a multi-tasking operating system.

As is illustrated in Figure 1 for PC3, each of the personal computers comprises a processor box 15, a disk storage device 16, an input device 17 (here shown as a keyboard), and a display unit 18. The disc device 16 may be one or more floppy disc drives and/or a hard disc unit; indeed, the device 16 may be a virtual disc device. In standard manner, the processor box 15 comprises a central processing unit 20 interfacing via a bus system 23 with memory (namely, volatile RAM memory 21, non volatile RAM memory 22 and the disc device 15) and also with the display unit 18 via a display controller 24, with the keyboard 17 via an I/O controller 25, and with the LAN 11 via a communications controller 26.

Each PC operates under a file-based operating system that utilises a tree-structured file directory, for example, MS-DOS versions 2.0 and above (MS-DOS is a trademark of MicroSoft Corporation). Files, whether data or program, are stored by the disc device 16 and are called into RAM memory 21 by the operating system as and when required.

Although the disc device 16 constitutes a permanent memory for the files, for reasons already discussed in the opening of the present specification, it is prudent to take regular backup copies of the files. To this end, and in accordance with the present invention, each PC is arranged under the control of a Requestor program, to backup files to and restore files from, the tape device 14 of the mini computer 12, the latter being controlled for this purpose by a continuously-available Server program.

The Requestor program for each PC is held in the local disc device 16 and is arranged to run under the local operating system. This program gives the user the choice of functions shown on the screen of the display unit 18 in Figure 1, namely the choice of:

1. backup of selected files,

2. backup of all files included in a predetermined list,

3. restoration of selected files.

Both backup choices involve the generation of a selection list of files to be backed up, the first choice requiring the generation of this list each time the choice is selected while the second choice utilises a list previously generated and stored (the pre-generation of this list being the fourth choice of the illustrated menu).

As will be more fully described hereinafter the generation of the backup selection list involves the presentation to the user of the current contents of the file directory of the PC's operating system (referred to below as the OS directory). The user then makes his choice of files for backup from the presented files.

In a similar manner, the restore choice involves the generation of a restore selection list by the user. In this case, however, the user makes his selection from the contents of a "backup" directory that records details of all files previously backed up from the PC concerned to the tape device 14 of the central station. In the present example, the maintenance of the backup directory is made the responsibility of each PC and the master copy of this directory is stored on the local disc device 16. However, a copy of the backup directory of each PC is also held centrally on the disc device 13 so that should a PC find that the local copy of the backup directory is missing or corrupted upon running the Requestor program, then a fresh copy of the directory can be rapidly called up from the central station. As an alternative to the above described arrangement, the backup directories for all the PCs could be maintained by the mini computer 12 and information from these directories only passed to the PCs upon request.

The backup directory may list different versions of the same file. Unless otherwise stated, the term 'versions' will be used herein to denote copies of the same file which differ in one or more specified version parameters such as file size, local operating-system time and date stamps, and access permissions. In order to distinguish between file versions, version data (size, time and date stamps, permissions) are held in the backup directory. Of course, only one version of a file listed in the backup directory can be 'current' in the sense that it is also listed in the current OS directory; indeed, if a file has been deleted from the OS directory, then all backed up versions will be non-current.

The backup directory is used not only to enable a user to make a restore selection, but also during backup to ensure that the same version of a file is not backed up twice at different times.

Returning now to a general consideration of the backup process, once the backup selection list has been generated or called up, a PC proceeds to establish communications with the central station 10 and to pass the selected files thereto in accordance with the relevant communications protocol. The files are in fact passed to the station 10 in predetermined maximum block sizes(64K). Since generally the data rate over the LAN 11 will be much lower than that required to stream the tape device 14, the received file blocks are first buffered to the disc device 13 before being recorded en bloc to the tape device 14.

The mini computer 12, under the control of the server program, is arranged to handle simultaneously the backup requirements of a number of PCs, this being possible due to the multi-tasking nature of the mini-computer's operating system. In implementing this arrangement, the server program is arranged to interleave file blocks received from different PCs before streaming them to the tape device. Tape position information on each block is passed back to the relevant PC for storage in its backup directory together with data on the breakdown of each file into blocks.

During restore, block information on the files selected for restore is retrieved from the backup directory of a PC and used to request the mini computer to forward the appropriate file blocks. These blocks when received back at the PC are stored in the disc device 15 and the local OS directory is updated accordingly.

Due to the fact that the files selected for restore may be scattered over the whole length of the tape media of the tape device 14, it is preferable to arrange for the central station 10 to service only one restore request at a time.

Having outlined the general operation of the backup and restore facility of the Figure 1 PC community, a fuller description will now be given of the main novel functional components. However, before describing the backup and restore mode operations, the structures of the OS directory and backup directory will be considered so as to permit a proper understanding of the system functioning.

Directory Structures

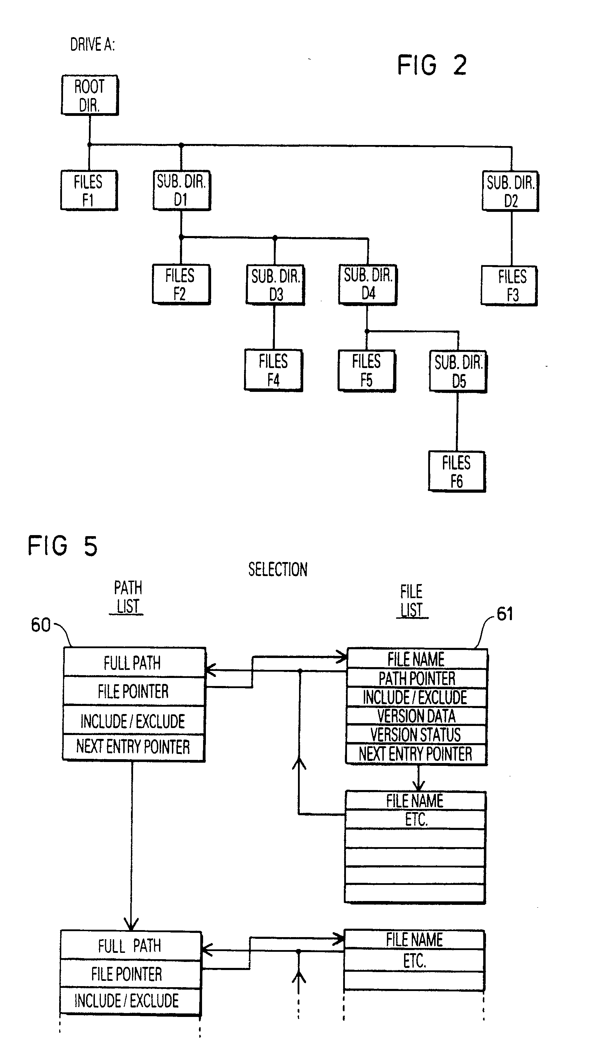

Figure 2 is a diagrammatic depiction of the tree-structured file directory of each PC operating system. The first level or 'root' directory lists a first group of files F1 and, in the present example, two sub-directories D1 and D2. In a similar manner, each sub-directory lists one or more files and/or further sub-directories; thus, the sub-directory D1 has files F2 and two sub-directories D3 and D4. Files in different directories can have the same name and to identify uniquely a file, it is necessary to specify not only the file name but also the drive and chain of directories leading to that file, this combination being generally termed the file pathname. The pathname of the files F6 in Figure 2 is thus:

A:\D1\D4\D5

Typical data structures for implementing the OS directory are well known to persons skilled in the art and will not be described therein.

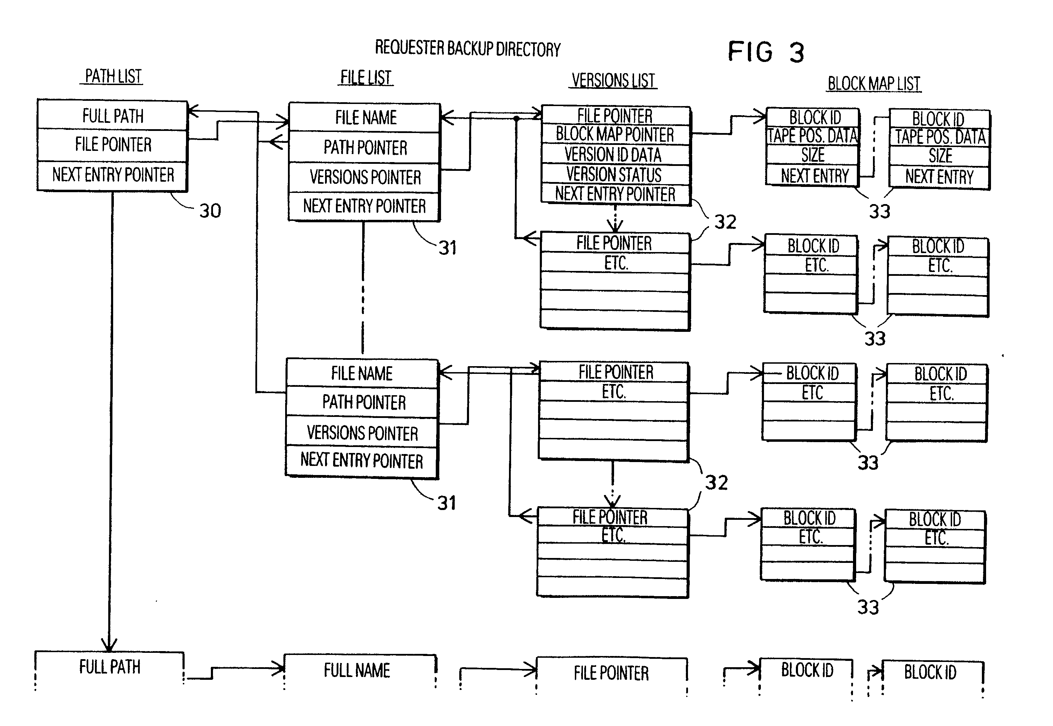

Figure 3 illustrates the data structures used for the backup directory. The backup directory comprises four linked lists the first of which is a path list containing an entry 30 for each different pathname of the backed up files.

The second backup directory list is a file list containing an entry 31 for each different backed-up file associated with a particular pathname. The file list entries associated with particular pathname are linked to each other and to the relevant path-list entry while the latter contains a pointer to the first associated file-list entry.

The third backup directory list is a versions list containing an entry 32 for each backed-up version of a file entered in the file list. The versions-list entries associated with a particular file are linked to each other and to the relevant file-list entry while the latter contains a pointer to the first associated versions-list entry. Each versions-list entry contains version identification data (file size, operating-system time and date stamps, permissions) and version status data (current or noncurrent).

The fourth backup directory list is a block-map list containing for each entry 32 in the versions-list, one or more linked entries 33 identifying the blocks into which the file version was divided when backed up. Each versions-list entry contained a pointer to the first associated block-map list entry. Each block-map entry contains information identifying the file block and indicating the position of this block on the tape storage media of the device 14.

File Selection Process

A basic operation associated with all three main requestor program functions ('selective backup'; 'backup all'; 'restore') is the interactive generation of a selection list by the user. As already noted, selection-list generation involves the display of the relevant directory (the OS directory in the case of the backup functions, and the backup directory in the case of restore). Thereafter, the user indicates which files are selected by using the PC input device 17 which, in the present example, is a keyboard.

In the present embodiment, the user can effect selection by file and by (sub) directory with the selection of a directory being taken as selection of all files in that directory and all sub-directories. Furthermore, files and directories can be specifically deselected so as to exclude these elements from a more general selection previously effected by choosing a higher level directory. The latest-in-time selection/deselection operation overrides earlier choices.

Figure 4 is a diagram illustrating the flow of control during the inter-active user-selection process. The first operation (block 40) is the display of the root directory of the OS or backup directory; the display of the root directory involves the display of all the files and subdirectories in the root directory. Next, a user selection phase is entered (block 41) in which the user is presented with a number of choices any one of which he can select by pressing an appropriate one of the keyboard keys.

A first choice, referenced 42 in Figure 4, provides for movement of the cursor around the display to pick out one of the files or directories presented. It will be appreciated that this cursor movement may be controlled by one or more keys as is considered appropriate. Selection of the cursor movement choice 42 results in the PC effecting the relevant cursor movement (block 43) before re-entering the user-selection phase (block 41).

A second choice, referenced 44, initiates the display (block 45) of a sub-directory picked out by the cursor before control is returned to the user-selection phase (block 41). A third choice 46 reverses this process in that it causes the parent directory of the currently displayed directory to replace the latter on the screen display. Choices 42, 44 and 46 together thus enable the contents of the whole of the OS or backup directory to be displayed starting from the root directory.

A fourth choice, referenced 47, enables the whole of the currently-displayed directory to be selected, or if already selected, to be de-selected (the operation of the keyboard key relating to choice 47 thus being a toggling action). Selection of choice 47 results in the selection list being appropriately updated in a manner to be described, but here indicated by block 48. This is followed by the highlighting or dehighlighting of all the files and sub-directories of the currently-displayed directory to indicate the selection or de-selection respectively brought about by the toggling of choice 47. Highlighting control is effected by block 49.

A fifth choice, referenced 50, offered by the user-selection block 41 is the selection/de-selection of cursor-picked files or sub-directories. Again, the operation of the relevant keyboard key acts as a toggle between the select and de-select functions. Selection of choice 50 results in appropriate up-dating of the selection list (block 51) followed by appropriate up-dating of the screen highlighting (block 52).

Use of the user-selection choices 47 and 50 enables any desired combination of files to be selected. Thus, for example, the following sequence of operations enables the selection of all files with the exception of all-but-one of the files in a first level sub-directory:

Choice 47    - toggles Root directory selection/deselection ; since initially the Root director is unselected, this directory becomes selected and all the files and sub-directories entered in the root directory are highlighted on the display.

Choice 42    - the cursor is moved to pick out the sub-directory in which all files but one are to be deselected.

Choice 50    - toggles selection/deselection for the picked sub-directory; since this directory was previously selected, it now becomes deselected and is dehighlighted.

Choice 44    - replaces the root directory display with the contents of the sub-directory of interest

Choice 42    - the cursor is moved to pick out the file to be selected

Choice 50    - toggles selection/deselection of the picked file; since this file was previously deselected, it now becomes selected and is highlighted

Once the desired files have been selected, the user exits the user-selection phase (block 41) by selecting choice 53 labelled "proceed" in Figure 4.

The foregoing description of the interactive selection-list generation process is complete so far as the selection of files from the OS directory for backup is concerned. However, the generation of a selection list from the backup directory during a restore operation is somewhat more complicated due to the possible presence of several versions of the same file. This complication is dealt with in the following manner. First, for each directory displayed from the main backup directory, the file names of all entries from the relevant portion of the file list (that is the portion linked to the appropriate pathlist entry) are presented on the screen. For each file, there is an indication of whether any of the versions of that file contained in the backup-directory versions list is a current version, that is, is a version currently in the OS directory. If a file is picked and then selected via user choice 50, then the current version of that file will automatically be selected in preference to other versions; if no current version exists, then user choice 50 is ignored. In order to select a non-current version of a file, a user choice reference 54 must be selected to result in the display of all versions of a picked file (block 55). The user is now presented with three choices (see block 56) these being cursor movement 57, toggling (selection/deselection) of the cursor-picked version 58, and returning to the relevant directory (choice 59). Only one version of the file may be selected at any one time.

The selection status of a non-current file version is arranged to be unaffected by a subsequent change in selection status of its parent (or any ancestor) directory.

Selection List

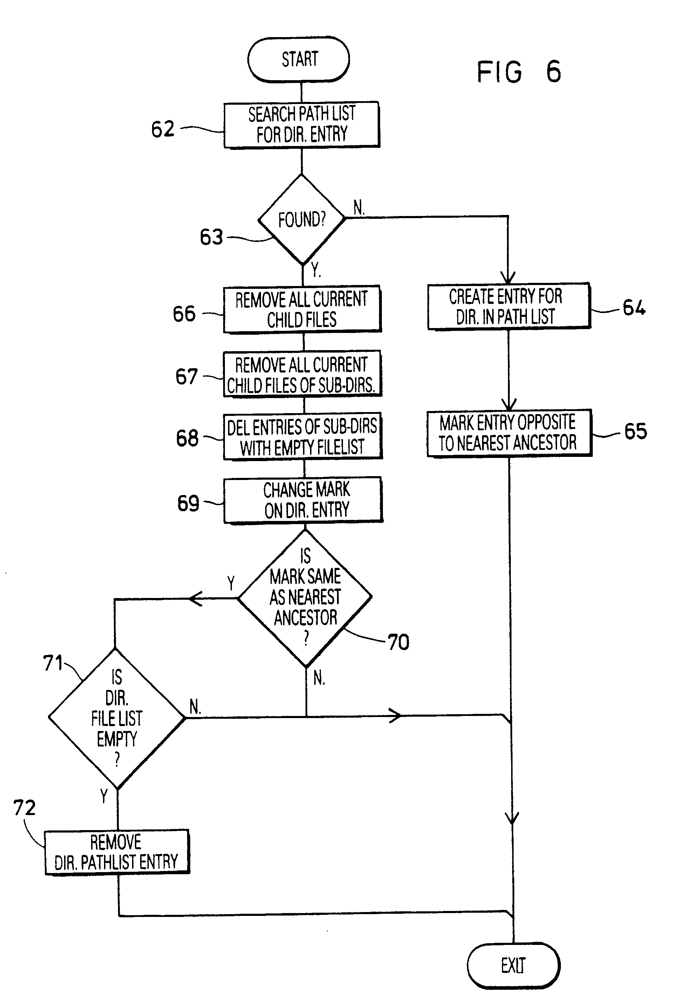

In a preferred embodiment of the present invention, each selection list, rather than being a straight list of all the files to be backed up or restored, takes the form of a two-part list in order to minimize the storage requirements of the list. The form of data structures used for the selection list will now be described with reference to Figure 5 followed by a description of the algorithms used to update and read the list (Figures 6, 7 and 8)

The selection list comprises a pathlist crosslinked with a filelist. Each entry 60 in the pathlist corresponds to a particular path and includes a pointer to any entries 61 in the filelist corresponding to files coming under that path.

Each pathlist entry and each filelist entry has an "include/exclude" flag for indicating whether the corresponding files are to be taken as included or excluded from the selection list.

At the start of a selection list generation process, the selection filelist is empty and the pathlist contains a single entry corresponding to the root directory of the disc device 15. For selection list generation during selective backup or during restore, this single pathlist entry has its include/exclude flag marked for "exclude"; however for generation of the predetermined selection list for use during the "backup all" mode, the include/exclude flag is preferably set to "include" and the root directory is appropriately highlighted when put up on the display screen 18.

Updating of the selection list in response to user selection choices 47 and 50 in Figure 4 is effected on the basis that the selection status of the particular directory or file has been toggled - the updating algorithms used are such as to automatically change the selection status of the corresponding file or directory. There is thus no need to indicate to these updating algorithms the absolute selection status of a file or directory.

Figure 6 is a flow chart of an algorithm for updating the selection list upon the selection status of a directory being toggled by the user. As can be seen, the first operation carried out by the updating algorithm is to search the selection pathlist to see if an entry already exists that corresponds to the directory concerned (block 62). If no entry is found in the pathlist (block 63), then a new entry is created for that directory (block 64) and this entry has its include/exclude flag set opposite to that of its nearest ancestor (block 65). Thus, if a sub-directory of an already included directory is toggled, then an entry is created for this sub-directory and the entry is marked for exclusion - this correctly reflects the user's choice since prior to being toggled , the sub-directory would have been displayed highlighted so that the toggling of the sub-directory must have been effected with a view to excluding the sub-directory from selection.

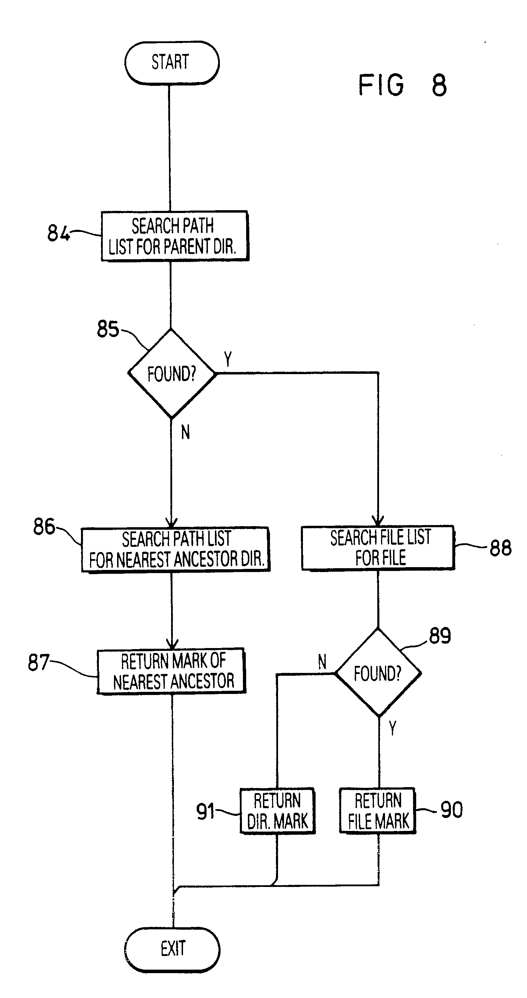

Returning to block 63, if an entry is found in the pathlist for a toggled directory, then the basic consequential operation is to change the status of the include/exclude flag of the directory entry. However, this operation will often result in redundant entries in the selection list as, for example, where several files have been specifically excluded from a selected directory and then this latter is subsequently deselected - in this case, the filelist will contain redundant exclusion entries for the files of the deselected directory. Since one of the main purposes of using the present selection list structure is to minimize the storage requirements for the selection list, the toggling of any pre-existing entry will generally be accompanied by housekeeping operations for removing entries rendered redundant by this toggling. In the present case, upon toggling of a directory for which an entry already exists in the pathlist, all filelist entries corresponding to current files of the directory and of all its sub-directories are deleted (blocks 66 and 67) since these entries will now be redundant. Furthermore, if the filelist of any subdirectory to the toggled directory is empty, then the pathlist entry corresponding to this sub-directory can also be removed (block 68). It should be noted that the filelist of the sub-directory will not necessary be empty as it may contain one or more entries corresponding to non-current file versions; as previously mentioned, the toggling of the selection status of a directory does not affect the selection status of non-current files. The reason why the sub-directory entry is left if a filelist entry exists that corresponds to a non-current file version, is that the algorithm to be described hereinafter with reference to Figure 8 for reading the selection list, requires the presence of a parent-directory entry as well as a file entry to properly identify the status of a non-current file contained in the filelist.

Following the deletion of unnecessary sub-directory entries in the pathlist, the include/exclude flag of the toggled directory is changed (block 69). If the status of this flag then corresponds to that of the nearest ancestor directory entered in the pathlist (block 70), and if the filelist of the toggled directory is empty (block 71), then the pathlist entry of the toggled directory is also redundant and can be removed (block 72).

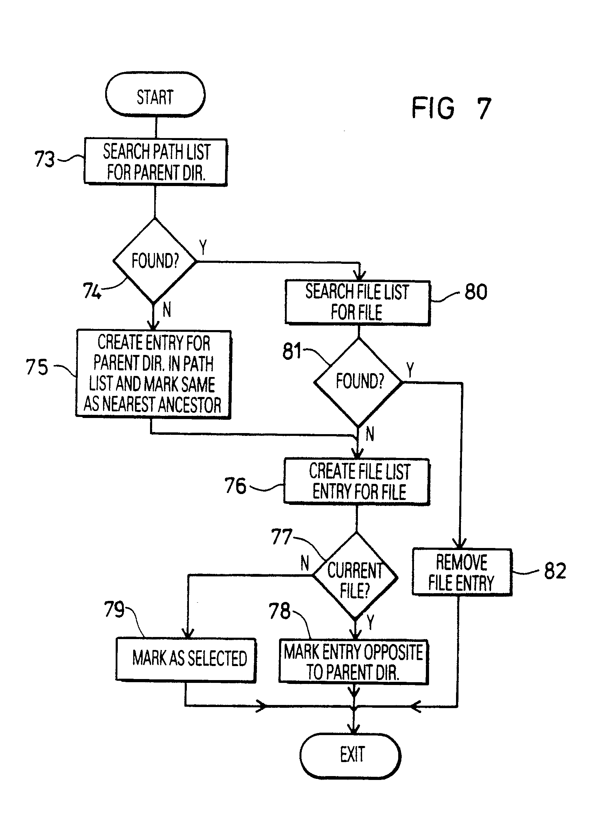

Figure 7 is a flow chart of an algorithm for updating the selection list in response to the toggling of the selection status of a file (user choice 50 in Figure 4). The first step in this updating algorithm is to search the pathlist for an entry corresponding to the parent directory of the file (block 73). If no such entry is found (block 74) then one is created in the pathlist and its include/exclude flag is set the same as the nearest ancestor directory entry (block 75). Thereafter, a filelist entry is created for the toggled file (block 76) and if the file is a current one (block 77) the include/exclude flag of the filelist entry is set opposite to that of the parent directory (block 78) as a current file will only have been toggled where its selection status is to be different to that of its parent directory. In the case of a non-current file, its include/exclude flag is set to "include" (block 79), the selection status of non-current files being independent of their parent directories.

Returning to block 74, if the initial pathlist search turns up an entry for the toggled file's parent directory, the filelist is then searched for an entry corresponding to the toggled file (block 80). If no such entry is found (block 81), then one is created in the filelist and its include/exclude flag is set as described above (see block 76 to 79). However, if a filelist entry is found for the toggled file, this entry is removed (block 82).

The updating algorithms described with respect to Figures 6 and 7 are those used by the interactive user selection process to create a selection list. The algorithm shown in the flowchart of the Figure 8 is that used by the main Requestor program to interrogate a selection list to discover whether any particular file has been selected or not.

To check the selection status of a given file, the pathlist is first searched for an entry corresponding to the file's parent directory (block 84). If no such entry is found (block 85) then there is no need to search the filelist since the Figure 7 updating algorithm will always cause the creation of a parent directory entry whenever a file list entry is generated. In the absence of a parent directory entry in the pathlist, the selection status of the file of interest is, of course, determined by the selection status of the nearest ancestor directory. Accordingly, the pathlist is next searched for the entry corresponding to the nearest ancestor entry (block 86) and the status of the include/exclude flag of this entry is returned as the selection status of the file of interest (block 87).

Where the initial pathlist search finds an entry corresponding to the parent directory file of interest, the Figure 8 algorithm proceeds to search the filelist for an entry corresponding to the file (block 88). If a filelist entry is found (block 89) the status of the entry's include/exclude flag is returned as the selection status of the file (block 90). If an entry corresponding to the given file is not found, then the status of the include/exclude flag of the parent directory entry is returned as the selection status of the file of interest (block 91).

It should be noted that when using the algorithms of Figures 6 and 7 in relation to a selection list for backup, the checking of the files identity can be based solely on the file's name since the only file versions being dealt with are current ones.

However, in the case of a selection list created for restore, the checking of a file's identity must be based on a check not only of the file's name but also of its version data.

Having described the inter-active user selection process and the updating and interrogation of the resultant selection lists, a description will now be given of the backup and restore function themselves.

## Backup Functions

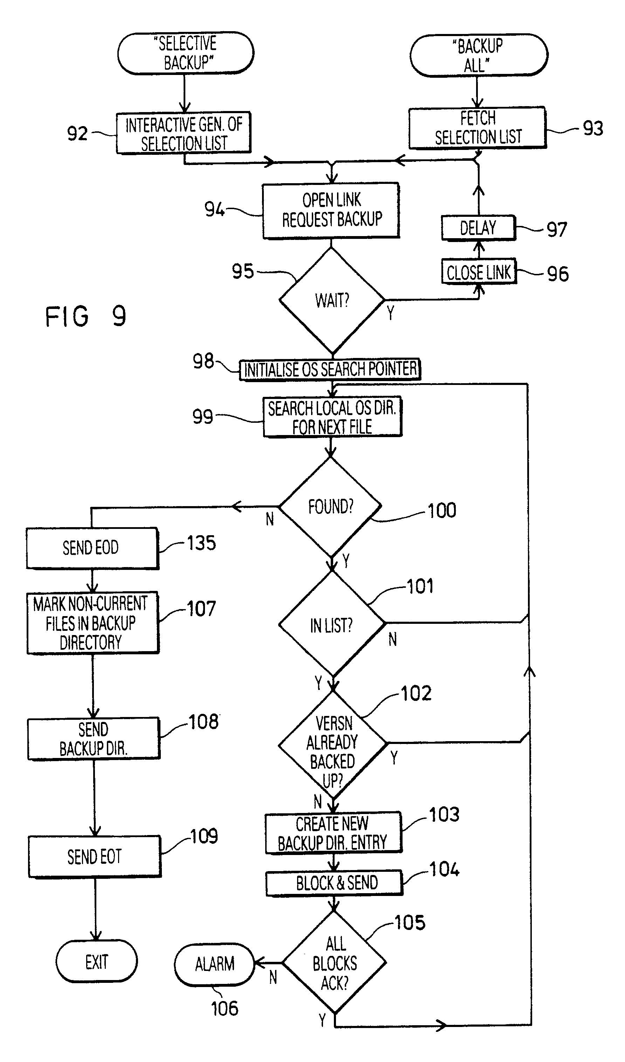

Referring to Figure 9, if the user chooses the "selective backup" function from the main menu presented by the Requestor program, then a backup selection list is first produced in the manner already described with reference to Figure 4; this process is indicated in Figure 9 by block 92. Where the "backup all" function is selected by the user then a previously created selection list is fetched from store (block 93).

In either case, once a selection list is available, the Requestor program opens up the link via LAN 11 with the central station 10 and requests the services of the latter for effecting a backup operation (block 94). The Server program will either grant this request or in certain circumstances (such as where a request for restore is already being serviced) ask the requesting PC to wait for a predetermined delay time before requesting again (block 95). Where the Requestor program is asked to wait, it will close the link with the central station (block 96) and wait for the specified period of time (block 97) before reinitiating the backup request.

Once the Server program has indicated to a requesting PC that the central station's backup facilities are available, the PC Requestor program proceeds to identify the files to be backed up.

It will be appreciated from the form of the selection list that this list in itself does not contain adequate information to identify all files to be backed up. Instead, the selection list must be used in conjunction with the current OS directory to identify the files for backup. The file idenfication process involves walking through the OS directory and checking whether each file found is encompassed by the current backup selection list. Algorithms for walking through the OS directory to find each file in turn will be apparent to persons skilled in the art and will therefore not be elaborated herein. However, it should be noted that so far as the main Requestor program is concerned (Figure 9) this walking of the OS directory is only required to be carried out one step at a time and that it is therefore necessary to maintain a pointer indicating the progress of this walkthrough.

The initial step in identifying the files to be backed up is therefore to initialise an OS search pointer to the start of the OS directory (block 98). Thereafter, the walkthrough of the OS directory is commenced (block 99) and when a file is found the search pointer is updated and the identity of the file is extracted (blocks 99,100).

The backup selection list is then interrogated in the mann previously described to check whether the file found by walking the OS directory is one selected for backup (block 101). If the file is not to be backed up, walking through of the OS directory continues from the new pointer position.

If, however, the file is found to be one selected for backup, a check is next made to see if that particular file version has already been backed up (block 102). This check is made by searching the backup directory and, again, appropriate search algorithms will be apparent to persons skilled in the art. If the current file version has already been backed up, then the walkthough of the OS directory is continued. Where the file version is not already backed up, the Requestor program creates a new entry for the file version in the backup directory (block 103) before proceeding to split the file into blocks and transmit them over the LAN 11 to the central station 10 (block 104). The creation of a new backup directory entry will always involve the creation of a new entry in the versions list (see Figure 3) and may also involve new entries in the filelist and pathlist. The splitting of the file into blocks results in appropriate entries being generated in the block map list.

The correct receipt of the file blocks by the central station 10 is, of course, checked for in accordance with the communications protocol being used. However, in addition, a check is made that the transmitted file blocks have been recorded on the storage media of the tape device 14. This check may be implemented by arranging for an appropriate message to be passed by the Server program to the requesting PC following a successful read-after-write operation on a file block. The Requestor program of the PC checks that messages have been received on all transmitted file blocks by maintaining a temporary transport acknowledgement list linked to the block map list. The messages passed back from the Server program to the Requestor program also contain data mapping block identity to relative position on the tape media, this information being stored in the relevant block map list entry for each file.

After all file blocks have been acknowledged as having been correctly recorded on the tape media, the walkthrough of the OS directory is continued to find the next file. If one or more file blocks are not acknowledged as having been correctly recorded on the tape media after a predetermined timeout, then an alarm is raised (see blocks 105 and 106).

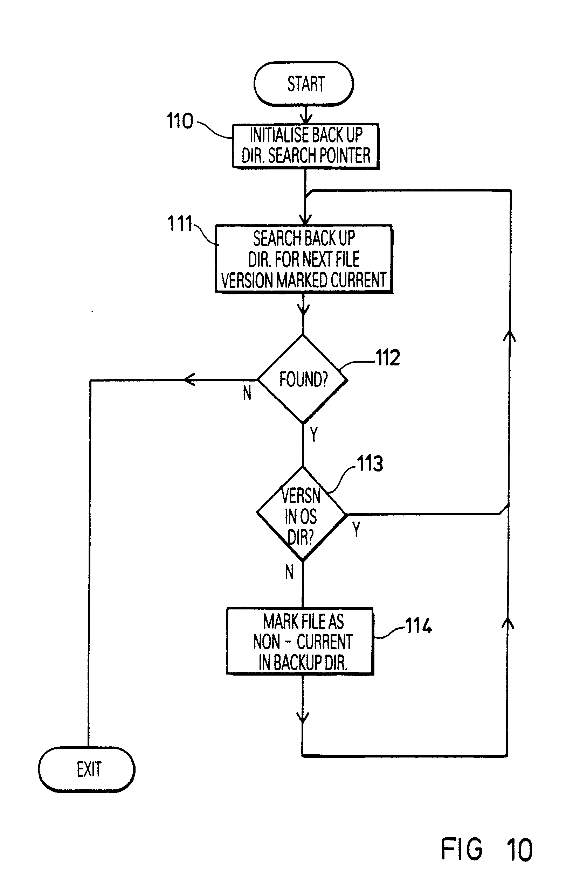

In due course, the walkthrough of the OS directory will be complete. Thereafter, an end-of-data (EOD) messsage is transmitted and the backup directory is updated in respect of which file versions listed therein are current (see blocks (135 and 107). Figure 10 shows in flow-diagram form a suitable algorithm for effecting this file-version status check. As can be seen, this check is carried out by walking through the backup directory and stopping at each file version marked as current to see if that file version is still listed in the OS directory. The process of walking through the backup directory is controlled by a search pointer initialised to the start of the backup directory (block 110). Upon a file version marked current being found, (blocks 111 and 112) the search pointer is updated and then a check is made as to whether that file version is still present in the OS directory-(113). If the file version is present in the OS directory, the process of walking through the backup directory continues from the position indicated by the search pointer. However, if the file version is no longer contained in the OS directory, the status of that file version is marked as non-current in the versions list of the backup directory (block 114).

After the updating of the file-version status information in the backup directory, the Requestor program proceeds to transmit the updated backup directory to the central station 10 (block 108) before sending an end-of-transmission (EOT) message to initiate closing of the link (block 109). The updated backup directory is stored in the central station on the disc device 13.

For reasons which will become clear below, it is desirable to enable the Server program to abort a backup operation. This can be achieved by substituting an abort message for a file block acknowledgement normally transmitted during execution of block 104; upon detecting such an abort message, the Requestor program can simply be arranged to close the link and terminate the current backup session, the whole backup operation being automatically re-initiated from block 94 after a predetermined delay.

## The Restore Function

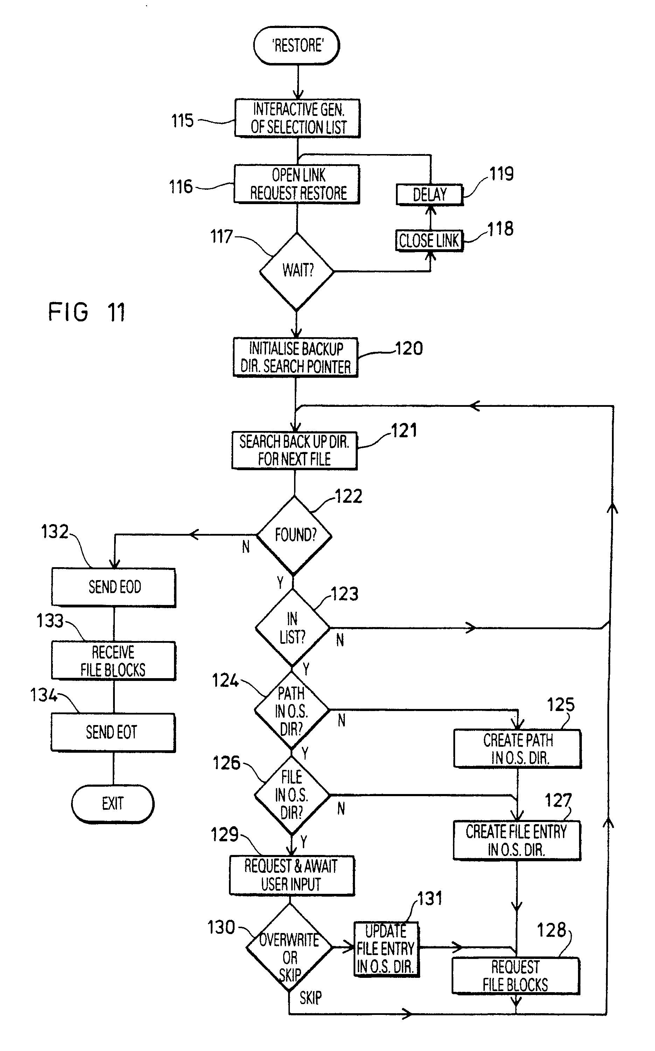

Selection of the restore choice from the opening menu presented by the Requestor program results in the sequence of operation illustrated in Figure 11.

The first operation is the inter-active generation of the restore selection list (block 115) in the manner already described with reference to Figure 4. Thereafter, the Requestor program opens the link with the central station 10 and passes a request thereto asking for the facilities of the central station to be made available for restoring one or more files to the requesting PC (block 116). As already noted, to facilitate access to the serial storage device constituted by the tape device 14, only one restore operation is allowed to be in progress at any one time and this operation cannot be effected at the same time as a backup operation. The Server program is therefore arranged to grant a restore request only if no other restore or backup process is in operation. If a restore or backup operation is running, then the Server program asks the requesting PC to wait (block 117) and, in this case, the Requestor program will close the link with the central station (block 118) and waits a pre-determined time before re-opening the link and re-submitting its restore request to the central station (block 119).

In due course, the restore request will be granted. Thereupon, the Requestor program will identify the files to be restored by walking the backup dictionary and checking each entry against the restore selection list. The step-by-step walkthrough of the backup directory requires the maintenance of a search pointer which is initialised to the start of the directory and updated each time a file is found and the walkthrough interrupted to check whether that file is in the restore selection list (see blocks 120, 121 and 122). Suitable algorithms for searching the backup directory on a file version by file version basis will be apparent to persons skilled in the art.

Each file version found in the backup directory is checked against the selection list in the manner already described with reference to Figure 8 (block 123, Figure 11). If the file is not indicated as being selected upon inspection of the list, the walkthrough of the backup directory is continued.

Upon identification of a file version selected for restore, the Requestor program first checks to see whether the existing OS directory is already structured with the path relevant to that file (block 124). If no such path exists, then the appropriate directory entries are created in the OS directory using the operating system functions which, in the case of MS-DOS are accessible through interrupt 21H (see block 125 in Figure 11).

If the path of the file to be restored already exists in the OS directory, then a check is next made as to whether the OS directory contains an entry corresponding to that file (block 126).

Where no file entry is pre-existing, then both in the case of a pre-existing path and in the case of a newly created path, a file entry is created in the OS directory corresponding to the file to be restored (block 127). Thereafter, the Requestor program utilises the data stored in the block map list of the backup directory to request the central station to forward the appropriate file blocks making up file to be restored (block 128). As will be explained hereinafter, the Server program does not respond to the file-block requests immediately but awaits the receipt of an EOD message before doing so. Once all the relevant blocks have been requested, the Requestor program continues its walk through the backup directory.

Returning to block 126, if the search of the OS directory shows that the file to be restored is already entered in the directory (albeit a different version of the file), the Requestor program prompts the user to confirm that he wishes the existing entry to be overwritten by one corresponding to the file version previously indicated as required for restoration (block 129). If the user indicates that he wishes the restore operation to continue (block 130), then the previous OS directory entry is overwritten (block 131) and the Requestor program proceeds to request the appropriate file blocks from central station 10. On the other hand, where the user indicates that he no longer wishes the restoration of the selected file to continue, the Requestor program returns to its walk through of the backup directory.

In due course, the walkthrough of the backup directory will be completed whereupon the Requestor program transmits an EOD message the effect of which is to trigger the Server program to retrieve and forward the requested file blocks (see blocks 132,133). After all requested file blocks have been received, the Requestor program send an EOT message to initiate closing of the link with the central station 10 (block 134).

The process of walking through the backup directory can generally be considerably shortened due to the fact that files selected for restore are normally to be found in only one or two subdirectories. Rather than walking the whole backup directory, the selection list can be examined to ascertain which directories are going to be relevant and then only these directories are walked.

A second type of restore request may be made by the Requestor program itself, this being a request for restoration of the appropriate backup directory; such a request is made by the Requestor program if upon initialisation the latter discovers that the directory is not present at the PC. A directory restore request will generally be granted immediately by the Server, the restore operation itself being terminated with an EOT message.

The Server Program

Having described the operation of the requestor program run by each PC, the functioning of the server program at the central station 10 will now be explained.

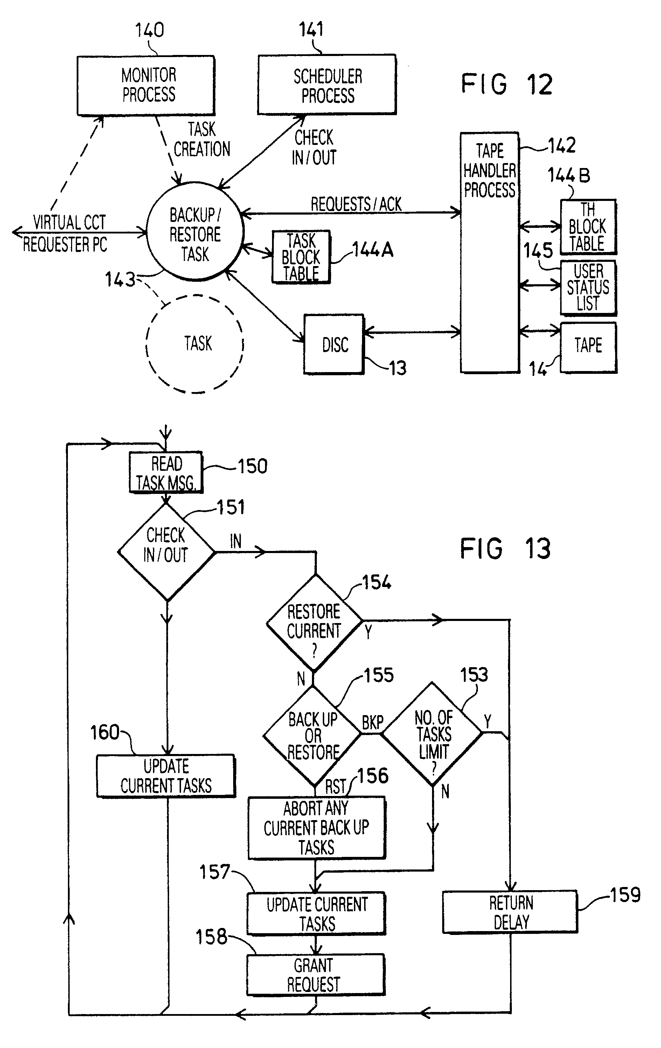

As already noted, the server program is designed to run under a multi-tasking operation system. The program comprises three main processes which run concurrently on the computer 12; as show in Figure 12, these three processes are respectively a monitor process 140, a scheduler process 141 and a tape handler process 142.

Whenever a PC makes a request to the central station 10 to backup or restore one or more files, the PC first establishes a virtual circuit with the computer 12 and directs its request to the monitor process 140. This process 140 is arranged to create for each requesting PC a respective task 143 which will be either a backup or restore task depending on the nature of the request. This task 143 then deals with all further communication between the server program and the particular PC concerned. On termination of a request due to its successful execution or otherwise, the task closes down the virtual circuit with the associated PC and then dies. At anyone time, several tasks 143 may be in existence.

As will be more fully explained hereinafter, upon creation, each task 143 checks in with the scheduler 141 which determines whether the request from the corresponding PC can be dealt with straight away or must be delayed. In the present embodiment, the scheduler is arranged such that a backup request cannot be granted whenever a previously-granted restore request is still being serviced though a restore request will cause any current backup task to be cancelled; furthermore, only one restore request may be serviced at a time though several backup requests can be serviced together.

Upon the scheduler granting a request, the relevant task 143 then proceeds to interface with the tape handler 142 to transfer file blocks in the appropriate direction between the requesting PC and the tape device 14. Communication between the task 143 and the tape handler process 142 is by way of:

- Request messages passed from the task 143 to the handler in response to inputs received from the corresponding PC; the main types of request messages are for the backup of a file block just received from the PC (a backup request message) and for the restore of a file block requested by the PC (a restore request message).

- Acknowledgement messages passed from the tape handler to the task to acknowledge the completion of a requested operation. Again, the main types of acknowledgement are backup acknowledgements output when a file block has been stored on tape, and restore acknowledgements output when a requested block has been read from the tape.

In the case of a backup operation, the task 143, as well as interfacing with the tape handler 142, also takes care of buffering file blocks to the disc device 13 prior to these blocks being streamed to the tape device 14 by the tape handler 142. The disc device 13 is also used to store the backup directories relating to each PC.

As will become clear below, an important data structure in the file-block transfer operation is a block table 144 which is a list of file blocks to be transferred to or from the tape device 14. Each active task has a version 144A of this table for the blocks it is responsible for, while the tape handler has a single table 144B which deals with all blocks that have been passed to it.

Another important data structure is a user status list 143 associated with the tape handler 142. This list 145 records for each user PC whether that PC is in one of the following four states:

Inactive

Active

Complete

Acknowledged

The last three states correspond to a user PC being at different stages in the process of transferring data to/from the central station 10. Each user entry in the user status list also contains other information such as the number of outstanding blocks waiting to be transferred to or from the tape device 14. A more detailed explanation of the operation of the server program will now be given starting with a description of the scheduler process 141.

## The Scheduler

As already noted, the function of the scheduler is to decide whether a newly-created task 143 should be allowed to run immediately or delayed for a predetermined period (in which case the task is, in practice, terminated and recreated by the monitor 140 in response to the relevant PC repeating its request after the predetermined delay).

The scheduler maintains a list of currently active tasks previously allowed to run by the scheduler.

Upon a newly-created task 143 checking in with the scheduler, the latter checks to see if a restore task is already current since if this is the case, no further tasks will be allowed and the scheduler will return a pre-set delay time, for example, 15 minutes, via the new task to the requestor PC (see blocks 150, 154, 159 in Figure 13). Where a restore task is not currently running, the scheduler next ascertains whether the checking-in task is a backup task or a restore task (block 155). In the latter case, the new task will have priority over any current task (as such tasks will be backup tasks,), so that the scheduler proceeds to abort all current tasks, grant the restore task request and update the current task list (blocks 156, 157, 158). On the other hand, if the checking-list task is a backup task, this will be allowed to run alongside the existing current backup tasks provided no more than a predetermined maximum number (for example, four) of such tasks are simultaneously current (block 153); if this condition is not fulfilled, the scheduler does not allow the task to run and returns a delay time.

When a task has been completed, it checks out with the scheduler which then removes the task from the list of tasks being run (block 160).

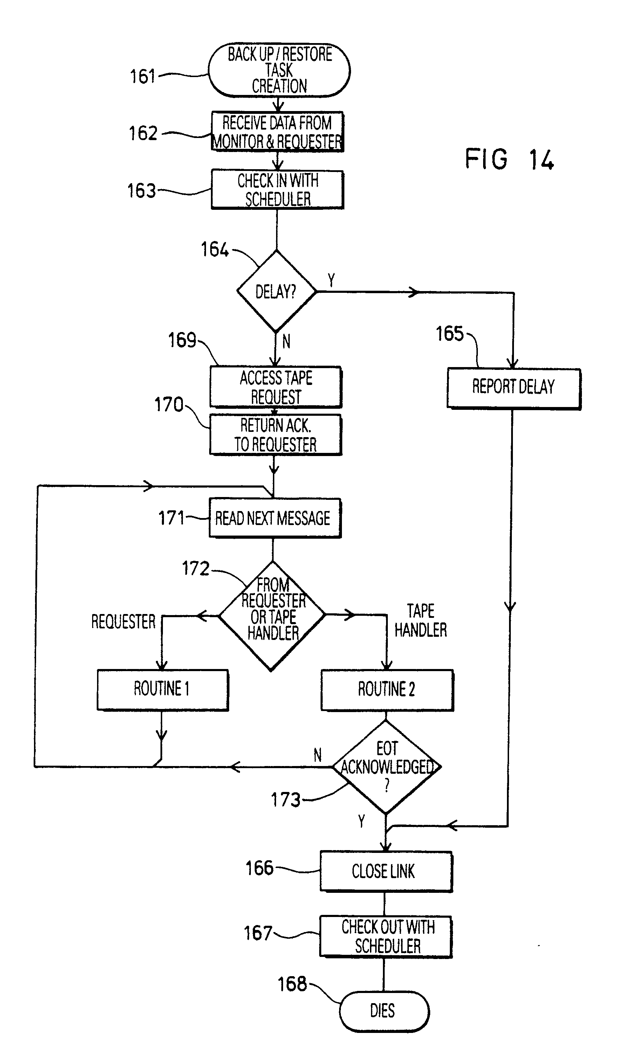

In order to facilitate the restoration of a PC backup directory, the scheduler can be arranged to grant such requests immediately (this facility is not shown in Figure 14). This does not cause currently active Backup tasks to be cancelled.

General Form of Backup and Restore Tasks

The general form of the task 143 created by the monitor process 140 is the same for backup and restore; Figure 14 is a flow chart representation of this general form.

Following task creation (block 161) the task receives various necessary items of data from the monitor process and the associated requestor PC (block 162); this data includes the messaging addresses for the scheduler and tape-handler processes 141, 142 and the return address of the requestor PC. Thereafter, the task checks in the scheduler process 141 by sending an appropriate message to the process (block 163).

As already described with reference to Figure 13, the scheduler will either allow the task to proceed or will return a delay time. If a delay time is returned (tested for in block 164), the task proceeds to report this delay back to the associated PC (block 165); thereafter, the task closes the virtual circuit link with the PC (block 166), checks out with the scheduler (block 167) and then dies (block 168).

If the scheduler allows the task to proceed immediately, the task informs the tape-handler by passing an access request message to the handler (block 169); the acknowledgement returned from the tape handler is then passed back by the task to the requesting PC (block 170) to indicate to the latter that it may proceed with the requested backup or restore function.

The task thereafter enters a cyclic phase in which it receives messages from the requesting PC and the tape handler (block 171), determines the origins of these messages (block 172) and then executes an appropriate routine in dependence on the message origin (routine 1 for messages from the requestor PC and routine 2 for messages from the tape-handler).

The task continues to receive messages and execute the appropriate routine until it receives an EOT acknowledgement from the tape-handler (block 173) as a consequence of the requestor PC having completed the desired function and sent an end-of-transmission message via the task to the handler which has thereupon acknowledged the receipt of the EOT message. Upon detection of the EOT acknowledgement, the task proceeds to close the link, check out with the scheduler and die (block 166 to 168).

The nature of routines 1 and 2 does, of course, depend on whether the task is a backup or restore task. Routines 1 and 2 will be described in greater detail hereinafter following a general outline of the tape-handler process 142.

The backup task in fact includes one additional branch not shown in Figure 14, permitting the scheduler process to abort a current backup task. This branch originates at a further exit from block 172 and is taken upon an abort message being received by the scheduler; the branch controls the passing of an abort message to the corresponding requester PC and to the tape-handler, after which blocks 166 to 168 are executed.

The Tape-Handler

The basic operation of the tape-handler process is to service request messages passed to it by the currently task or tasks 143. Five separate types of request messages can be distinguished, these being:

    1) access request messages from newly allowed tasks whereby the associated requesting PC is noted as active by the tape-handler;

    2) backup request messages from backup tasks requesting the tape-handler to store to tape file blocks received by the task from their associated PCs - these requests may not be complied with immediately by the tape-handler as it may wait for sufficient file blocks to be present to facilitate streaming of the tape;

    3) restore request messages from a currently running restore task requesting the tape-handler to read off particular file blocks from the tape device and pass them back to the appropriate PC;

    4) directory request messages from tasks wishing to backup or restore PC backup directories stored on the disc device 13;

    5) abort request messages from a backup task, requesting the tape-handler to note that the task is being aborted.

The tape-handler process can reside in any one of the three main modes namely a no-operation mode (NOP mode), a backup mode in which the handler is dealing with one or more backup requests only, and a restore mode in which the handler is dealing with single restore request only. The current mode of the tape-handler depends on the type of task currently being allowed to run by the scheduler process; when no task is current the tape-handler is in the NOP mode.

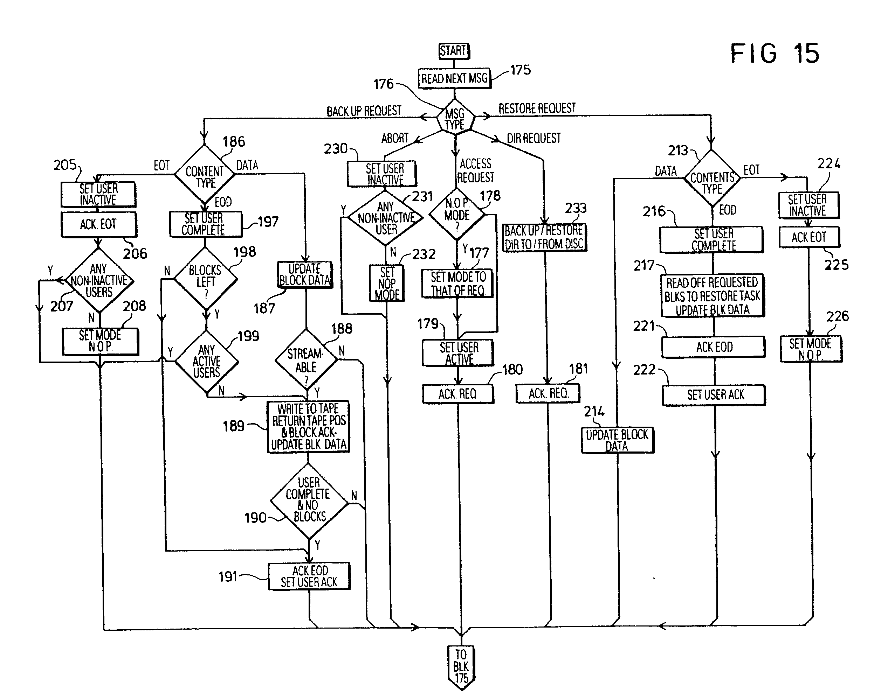

Referring now to the tape-handler flow chart shown in Figure 15, the cycle of operation of the tape-handler starts with the latter reading in a message sent to it from a task (block 175). After determining the message type (block 176), the tape-handler proceeds to process the message accordingly.

Starting from the situation where the tape-handler is in its NOP mode, the next message that it will receive is an access request message from a backup or restore task. Having determined the message type, the tape-handler resets its mode to correspond to that of the originating task (backup or restore), an indication of the task type being contained in the access request message (block 177). In the case of an access request being made by a backup task when similar tasks are already running, the latest access request will already find the tape-handler in the appropriate mode so that the mode-setting operation is skipped by carrying out an appropriate test (block 178). Thereafter, the tape handler updates the user status list 145 by noting that the user PC initiating the current task is "active" (block 179). Once the user list has been updated, the tape-handler acknowledges the access request by passing back a message to the task concerned (block 180); as previously noted, this acknowledgement is forwarded by the task to the requesting user PC (see block 170, Figure 14).

After a task has signed on with the tape-handler by means of an access request message, it proceeds to send backup or restore request messages to the tape-handler and receives appropriate acknowledgements therefrom until the desired function of backup or restore is complete. A detailed description of the processing of backup and restore request messages by the tape-handler will be given hereinafter when describing the routines 1 and 2 that are at the heart of the backup and restore tasks.

The tape handler responds to a directory request message either by backing up to, or restoring from, an allocated disc file, the backup directory of the PC associated with the task sending the request message (block 233, 181).

Finally, on receipt of an abort message, the tape handler will set the status of the corresponding user to "inactive", remove any relevant entries from the tape-handler block table 144B, and, if all users are then "inactive", reset its mode to NOP (see blocks 230 to 232).

The Backup Operation

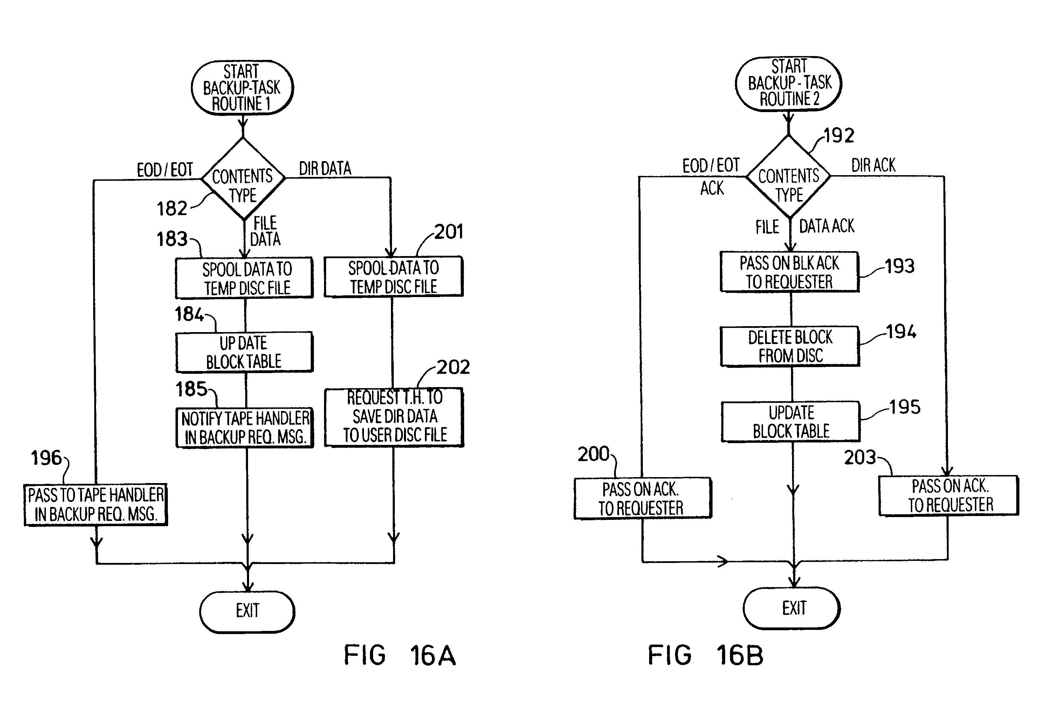

The inter-action of a backup task and the tape-handler process in carrying out the backup operation to the tape device 14 will now be described with reference to the tape-handler flowchart Figure 15 and to the flowcharts of Figures 16A and 16B which respectively illustrate the form of the routines 1 and 2 in the back up task.

It will be assumed that a PC requiring backup has made an appropriate request to the central station and that a corresponding backup task has been created by the monitor process 140; it will also be assumed this task has been allowed to proceed by the scheduler process 141 and that the task has signed on with the tape-handler process 142 and returned the acknowledgement received therefrom back to the requesting PC. The backup task is therefore at the position of block 171 in the Figure 14 task flowchart and is ready to receive messages from the requesting user PC and the tape-handler process; the tape-handler itself is in its backup mode and ready to receive messages from the backup task.

The first message received by the backup task will be from the associated PC and will include a file block to be backed up to tape. On receipt of this message, the backup task executes backup routine 1 shown in Figure 16A. This routine first tests the contents of the message received from the PC (block 182) to ascertain whether the message contains file data to be backed up to the tape device, backup directory data to be stored on the disc device, or an end-of-data (EOD) or end-of-transmission (EOT) signal. As already noted, the first message received from the PC will contain file data and the backup routine 1 proceeds by spooling this data to a temporary disc file (block 183). Having spooled the file data to disc, the routine updates the task block table 144A with an entry identifying the file block and its origin (block 184). Thereafter, the routine notifies the tape-handler process that it has a file block waiting to be backed up to tape, this notification being by way of a backup request message (block 185). The backup task then exits routine 1 and waits to receive another message.

The tape-handler, having received the backup request message from the backup routine 1, first tests to see whether the message is informing it of the presence of a file block to be backed up or whether the message contains an EOD or EOT indication in respect of the current backup operation (block 186). Having determined in the present case that the backup request message relates to the presence of a file block to be backed up, the tape-handler process first notes the existence of the file block awaiting backup by both making an entry in the block table 144B and updating the blocks outstanding field for the appropriate user entry in the user status list 145 (see block 187). Thereafter, the tape-handler checks to see whether the aggregate size of the file blocks temporarily held on the disc device is sufficient to enable streaming of the tape device 14 (block 188). If this is not the case, the tape-handler takes no immediate further action and awaits receipt of the next message. On the other hand, if the aggregate size of outstanding blocks is such as to enable the tape device to be streamed, then the tape-handler initiates transfer of the corresponding file blocks from the disc device to the tape device (see block 189), the necessary information on the blocks being available to the tape-handler in the block table 144B. As each file block is written to tape a read-after-write check is carried out and, assuming that the results of this check are satisfactory, the tape then passes an acknowledgement message back to the appropriate backup task and updates the block table 144B and the blocks-outstanding information in the appropriate user list entry.

It should be noted that since more than one backup task may be running, the question of whether there is sufficient file data to stream the tape device will not necessarily depend upon whether sufficient data has been received from any particular PC. Furthermore, the updating of the user status list and the destination of acknowledgment messages will depend upon the user (requesting PC) associated with each file block backed up to tape.

The flowchart blocks 190 and 191 shown as following the write-to-tape block 189 in Figure 15 relate to happenings that occur at the end of the backup operation and will be described later on; for the moment, it will be assumed that they do not apply to the backup operation under consideration so that after carrying out the functions indicated in block 189 the tape-handler returns to await the receipt of the next message.

Returning now to the backup task, the next message received by this task will generally either be a further file-block-containing message from the requesting PC or, if the tape-handler decided that it could stream from the tape device, an acknowledgement message from the tape-handler indicating that the previously-received file block has been successfully written to tape. In this latter case, the backup task will proceed to execute routine 2 illustrated in Figure 16B. This routine involves an initial test of the acknowledgment message to see whether it is an acknowledgement of file block data or of an EOD/EOT signal (block 192). Where a fileblock has been acknowledged, the routine looks after passing on the acknowledgement back to the requesting PC (block 193), deleting the block from the temporary disc file where it was stored on receipt (block 194), and updating of the task block table 144A by removal of the corresponding entry (block 195). On exiting routine 2, the backup task returns to block 171 to await receipt of the next message.

In the general case, in due course another message will be received from the requesting PC containing fileblock data to be backed up. Such a message is dealt with in the manner already described by the backup task calling routine 1 to notify the tape-handler of the presence of the newly received file block. Furthermore, the tape-handler will deal with the new backup receipt in the manner already described, only returning acknolwedgements when the file block is written to tape and checked.

When the requesting PC has transmitted all the fileblocks intended, it sends an EOD message. This message is identified by backup routine 1 and passed to the tapehandler in a backup request message (see block 196 in Figure 16A). On detecting the presence of an EOD signal in the backup request message, the tape-handler sets the status of the corresponding user PC as "complete" in the user status list 145 - that is, the PC has completed its transmission of file data (block 197 in Figure 15). However, this status does not mean that the backup of file data is complete since there may still be file blocks temporarily stored on disc waiting to be written to tape. If a test shows that this is not the case (block 198) then the EOD signal is acknowledged and the user status in the user status list 145 is set to "acknowledged" (block 191). On the other hand, if there are still file blocks waiting to be written to tape, then a check is made (block 191) as to whether there are any other user PCs active since, if not, this means that the critical size for streaming will not be reached in the near future and the backup operation could effectively be suspended until some indeterminate time when another backup task is initiated. To avoid this situation, if there are no other active users, the tape handler writes any outstanding blocks to tape and acknowledges the blocks in the usual way. When the last block has been written to tape and acknowledged the status of the user is changed from "complete" to "acknowledged" and an EOD acknowledgement sent (blocks 190, 191). If, however, the test carried out in block 199 shows that there are users still active, then the writing of outstanding blocks is deferred as it is quite likely that a streamable mass will be shortly achieved; of course, even in this deferred situation once all outstanding blocks of a "completed" user have been written to tape, that user's status is set to "acknowledged".

On receipt of an EOD acknowledgement message, the backup task relays this acknowledgement to the corresponding PC (see block 200 of backup routine 2 in Figure 16B).

It should be noted that the file block acknowledgements passed back by the backup routine 2 to the corresponding PC contain tape location information for the corresponding file block and this information is stored by the requesting PC in the block map list of its backup directory.

After the requesting PC has transmitted all the file data to be backed up and followed it with an EOD message, the PC next sends up the updated backup directory for storage by the disc device 13. Upon the backup task ascertaining that the contents of a message from its associated PC contains backup directory data (see block 182 in Figure 16A), the task after having first spooled the data to a temporary disc file, sends a directory request to the tape-handler requesting the latter to backup the directory to disc (blocks 201,202). The tape-handler then proceeds to write the directory data to a predetermined disc file associated with the requesting PC overwriting any existing information in that file (block 233). The tape handler then passes an acknowledgement to the backup task which forwards this acknowledgement to the PC (block 203, Fig. 16B).

Finally, the requesting PC will transmit an EOT message. This message is passed by backup routine 1 to the tape-handler as a consequence of which the status of the corresponding user PC is set as "inactive" in the user status list (see block 205 in Figure 15). The EOT message is then acknowledged by the tape handler (block 206) and if no non-inactive users remain, the tape-handler reverts to its NOP mode (blocks 207 and 208). After passing back the EOT acknowledgement from the tape handler to the requesting PC, the backup task closes the link with the PC and checks out in the manner previously described.

The Restore Operation

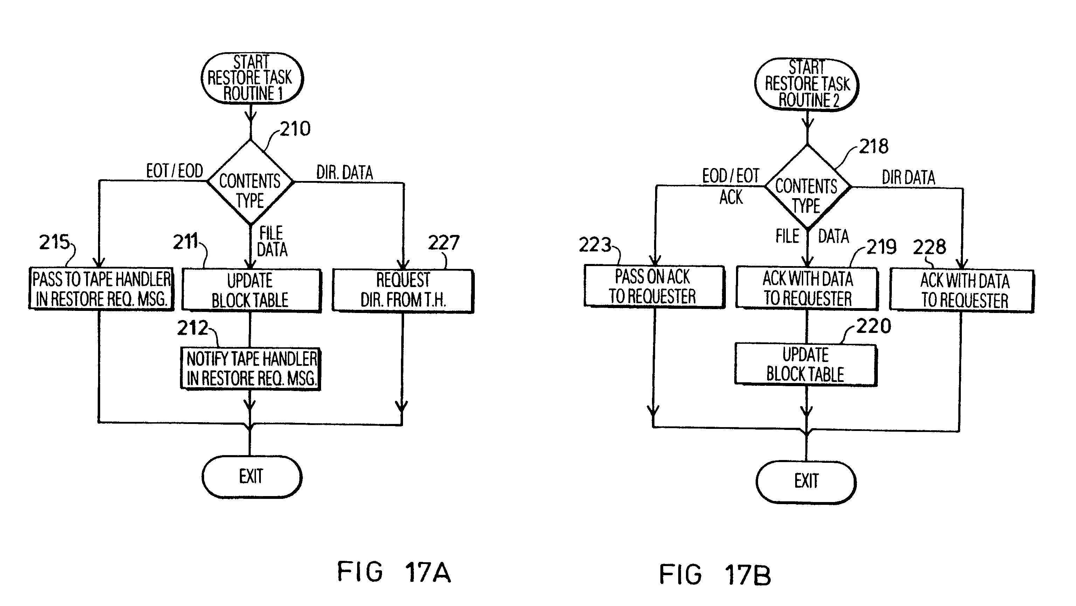

The inter-action of the restore task and the tape-handler process in carrying out a restore operation will now be described with reference to the tape-handler flowchart of Figure 15 and the flowcharts of Figures 17A and 17B which respectively relate to the restore routines 1 and 2. As with the description of the backup operation, the following description of the restore operation will assume that a restore task has already been created in response to a request from a PC and that this task, after having been allowed and having checked in with the tape handler, is awaiting receipt of a message from the requesting PC.

The PC concerned may request either the restoration of one or more files by making requests for the constituent file-blocks or, alternatively, may request the restoration of the backup directory associated with the PC and stored on the disc device 13.

Considering first the case where the PC requests the restoration of one or more files, upon receipt of a message from the PC identifying the first file block to be restored, the restore routine 1 (see Figure 17A) having tested for the type of restore requested (blocks 210), makes an entry in the task block table 144A in respect of the requested fileblock and then notifies the tape-handler of the restore request (blocks 211,212).

On receipt of a restore request message from the restore task, the tape handler first checks whether the message is a true request or merely one containing EOD/EOT information (blocks 213 of Figure 15). The tape-handler in response to receiving a file-block restore request, makes an appropriate entry in its block table 144B and also updates the user list 145 regarding the number of blocks to be restored (block 214); however, block restoration does not take place immediately.

The process of receiving file-block restore requests and logging them continues in the above manner until all such requests from the requesting PC has been received. In due course, the PC will send an EOD message which will be passed by the restore routine 1 to the tape-handler (see block 215 in Figure 17A). On receipt of an EOD indication in a restore request message, the tape-handler changes the status of the user PC in the user status list 145 from "active" to "complete" (block 216). The tape-handler then proceeds to read off the required blocks from the tape back to the requesting PC (block 217). This process involves the tape-handler referring to the block table 144B to identify each block to be restored and its location on the tape, this information having been passed up to the central station from the requesting PC. In order to facilitate this process the entries in the block table 144B are linked in the order in which the fileblocks appear on the tape, this linking being carried out at the time each newly received block is entered into the block table.

As each block is read off the tape and passed to the restore task, the block table 144B and blocks outstanding information contained in the corresponding user list entry are updated.

Each file-block-containing message received by the restore task from the tape-handler is forwarded with an acknowledgement to the requesting PC (blocks 218, 219 Figure 17B). In addition, the restore task updates the block table 144A by removing the entry corresponding to the file block passed back to the PC (block 220).

After all the requested blocks have been restored, the tape-handler passes an EOD acknowledgement message to the restore task (block 221) and the status of the user PC in the user status list 145 is changed from "complete" to "acknowledged" (block 222). On receipt of the EOD acknowledgement from the tape-handler, the restore task routine 2 passes on this acknowledgement to the requesting PC (block 223, Figure 17B).

In due course, the requesting PC transmits an EOT message which is passed by the restore-task routine 1 to the tape-handler. The latter, on receipt of the restore request message containing an EOT indication, changes the corresponding entry in the user status list from "acknowledged" to "inactive", passes an EOT acknowledgement message to the restore task, and resets itself into its NOP mode (blocks 224, 225 and 226 in Figure 15).

On receiving the EOT acknowledgement from the tape-handler, the restore task forwards the acknowledgement to the requestor PC and then closes the link and checks out in the manner previously described.

In the case where the requesting PC requests restoration of the last-stored backup directory, the restore-task routine 1, on detection of such a request, asks the tape-handler to forward it the backup directory (block 227 of Figure 17A). On receipt of this request the tape-handler, reads off the backup directory information from the disc device 13 and forwards it to the restore task which, in turn, forwards it to the requesting PC together with an acknowledgement of the request (block 228). Thereafter, the requesting PC transmits an EOT message which is forwarded by the restore task in a restore request message to the tapehandler to be dealt with in the manner explained above.

It is convenient to arrange for backup-directory restore requests to queue jump the normal operation of the server program. This can be readily achieved by arranging for the scheduler process always to allow such requests. In addition, it would be necessary to arrange for the tape handler not to reset its mode upon receiving an access request for directory restore or upon an EOT indication being receiving at the end of processing such a request. With these modifications, a backup-directory restore request could be processed alongside any other type of request.

It will be appreciated that the above-described algorithms have been simplified in certain respects to aid the clarity of the description. In particular, the various error condition traps that would normally be included in such algorithms have not been specificially disclosed as suitable implementations of such traps will be readily apparent to persons versed in good programming practice.

Furthermore, many variations are possible from the disclosed algorithms without loss of the benefits of the present invention. Thus, for example, instead of the tape handler in its restore mode waiting until all desired files have been requested before initiating file restore, each file block could be restored immediately following receipt of the restore request by the tape handler. Such an arrangement would only be practical, however, where the requestor program carried out an initial sort of the files required so as to transmit file-block restore requests in the order that the file blocks appear on the tape media.

In another possible variation, the scheduler process is arranged to generate a queue list of requests that it cannot immediately grant; this queue is in time order of request receipt except that restore requests are placed above backup requests. Instead of a refused requester PC being asked by the scheduler to try again after 15 minutes without any priority as compared to a first time requester, the scheduler now returns to the requester PC a delay time calculated to be the time after which the scheduler can grant its request taking into account its position in the queue and the types of tasks in front of it. If upon retrying, a PC's request still cannot be granted, it retains its position in the queue and a new estimate of when the server will be free is returned to the requesting PC.

Again, whereas in the described embodiment, the transmission of data (file or directory) takes places separately from EOD or EOT indications, such indications can, in fact, be included in data-transmitting messages provided that the indication is not acted upon until the transmitted data has been appropriately handled.

The above-described backup and restore arrangement only backs up file versions not previously backed up. For various reasons, it may be desirable to provide a user with the option to backup a file version already backed up on a previous occasion. In this case, in order to distinguish between the two otherwise identical backups of the same file, the file version information stored in the versions list of the backup directory, must be expanded to include a backup time and date stamp; this stamp is then presented to the user whenever he selects the "display versions" option of the restore user-selection menu (see Figure 4).

In the described backup and restore arrangement it has been assumed that all backed-up file data is stored on a single tape media. Where large volumes of data are to be backed up, provision can be made for using multiple tape volumes arranged in one or more volume sets. Various strategies are possible for using and accessing the tape volumes. Thus, for example, it is convenient normally to have on-line a particular empty or only partially-full tape volume to which all backups can be made regardless of their originating PC; this tape volume would only be replaced either temporarily when carrying out a restore from an earlier tape volume, or when the tape volume becomes full. It is of course, necessary for the tape location information held in the block map list of a PC's backup directory, to identify uniquely the tape volume holding each fileblock. During a restore operation, each tape volume containing relevant file blocks is called up in turn and all fileblocks of interest are read off before another volume is mounted; this orderly retrieval of fileblocks is achieved by appropriately linking the entries in the block table 144. The actual changeover between tape volumes may be automatic or effected by a central-station operator in response to an appropriate prompt generated by the tape-handler process.

To facilitate future usage of tape volumes, it is convenient to arrange the volumes in sets and to store on one volume of each set, the backup directories of all the PCs. These backup directories are arranged to be read off from the disc device 13 to a pre-designated area of the tape volume when the last volume of the volume set becomes full.

## Claims

1. A personal-computer community comprising a plurality of independently-operable personal computers (PC 1-3), a central station (10), and a communications arrangement (11) communicating each personal computer (PC 1-3) with the central station (10), each personal computer (PC 1-3) being arranged to operate under a file-based operating system to store and retrieve working files from a non-volatile storage area (16) associated with that personal computer, the operating system maintaining a directory of said files and in order to provide a file backup facility for the personal computers:
   - the central station (10) is provided with a mass storage device(14),
   - each personal computer (PC 1-3) is operative
     a) in a backup mode, to enable user-selection of files for backup and to transmit the selected files to the central station (10), and
     b) in a restore mode, to enable user-selection of files to be restored from backup, to request and receive the files selected for restore from the central station (10), and to update the operating system file directory with an entry corresponding to each restored file; and
   - the central station (10) is arranged to store files transmitted thereto in said mass storage device (14) and to return selected files when so requested;
   said central station (10) comprising a multi-tasking computer characterized by being operative (12) to handle the file backup requirements of several said personal computers (PC 1-3) concurrently and to transfer files to said mass storage device (14) in the central station (10) in the form of blocks of data of predetermined maximum size, the central station (10) when backing up several personal computers concurrently, interleaving blocks from files of different personal computers (PC 1-3).

2. A personal-computer community according to claim 1, wherein said mass storage device is a tape device (14), the central station (10) further comprising a disc memory device (13) for buffering file block transfer to the tape device (14).

3. A personal-computer community according to claim 2, wherein for each personal computer (PC 1-3) requiring backup, the central station (10) is operative to run a respective backup task (143) for receiving file blocks from that personal computer and transferring them to said disc memory device (13); the central station (10) being further operative to run a tape handler process (142) for transferring file blocks from the disc memory device (13) to the tape device (14), the identity of file blocks to be transferred from the disc device (13) to the tape device (14) being held in a block table (144B) to which entries are added as a said backup task (143) transfers blocks to the disc device (13) and from which entries are cancelled upon transfer of said blocks from the disc device (13) to the tape device (14).

4. A personal-computer community according to claim 3, wherein the tape handler process (142) is arranged to defer transfer of file blocks held on the disc device (13) to the tape device (14) until a minimum amount of data is ready to be transferred, the tape handler process (142) ascertaining the amount of data to be transferred to the tape device (14) by referencing the block table (144B).

5. A personal-computer community according to claim 2, wherein for each personal computer (PC 1-3), a backup directory (30-33) of files backed up from that computer (PC 1-3) is maintained within the community, said backup directory (30-33) including information relating each file block of a backed up file to its position on the tape storage media of the device (14).

6. A personal-computer community according to claim 2, wherein the central station (10) is arranged to handle file restoration to one personal computer (PC 1-3) only at a time, the file blocks of the files selected for restore being read off from the tape device (14) in the order in which they occur on tape (14) whereby to facilitate the tape read process.

7. A personal-computer community according to claims 5 and 6 in combination, wherein the order of occurrence on tape (14) of the file blocks to be restored is determined at the time of restore by reference to the relevant backup directory containing information on the tape position of the file blocks.

8. A personal-computer community according to claim 2, wherein for each personal computer (PC 1-3) a backup directory (30-33) of files backed up from that personal computer (PC 1-3) is maintained within said community, the arrangement being such that when in its restore mode, each personal computer (PC 1-3) has its backup directory (30-33) present and is operative to display the contents thereof to the user for selection.

9. A personal-computer community according to claim 2, wherein for each personal computer (PC 1-3), a backup directory (30-33) of files backed up from that personal computer (PC 1-3) is maintained within said community, the directory (30-33) for each personal computer (PC 1-3) including version data of each file at backup; the arrangement being such that when in its backup mode, each personal computer (PC 1-3) has its backup directory (30-33) present and is operative to compare information on the operating-system files selected for backup with the information in said backup directory (30-33) and to backup only those files which either do not appear in the backup directory (30-33) or have different version data.

10. A personal-computer community according to claim 8 or 9, wherein the central station (10) is arranged to keep said backup directories (30-33) on said disc device (13), the central station (10) being further arranged to pass a copy of the backup directory (30-33) relevant to a particular personal computer (PC 1-3) to that personal computer (PC 1-3) upon request therefrom, and each personal computer (PC 1-3) being operative to request the central station (10) to forward the relevant backup directory (30-33) where the latter is not present in the personal computer when it is to operate in a said mode requiring its backup directory (30-33) to be present.

11. A personal-computer community according to claim 10, wherein the request from a personal computer (PC 1-3) for a copy of its backup directory (30-33) is given priority by the central station (10) over any current backup or restore operations.

**Revendications**

1. Communauté d'ordinateurs personnels, comprenant une pluralité d'ordinateurs personnels (PC1-3) utilisables individuellement, un poste central (10) et un système de communication (11) faisant communiquer chaque ordinateur personnel (PC1-3) avec le poste central (10), chaque ordinateur personnel (PC1-3) étant agencé pour fonctionner sous un système d'exploitation à base de fichiers en vue du stockage et de l'extraction de fichiers de travail d'une zone de mémoire rémanente (16) associée à cet ordinateur personnel, le système d'exploitation maintenant un répertoire de ces fichiers et, dans le but de fournir un moyen de sauvegarde de fichiers pour les ordinateurs personnels:

   - le poste central (10) est pourvu d'une mémoire de grande capacité (14),
   - chaque ordinateur personnel (PC1-3 est opérationnel
     a) dans un mode de sauvegarde afin de permettre la sélection par l'utilisateur de fichiers pour la sauvegarde et pour transmettre les fichiers sélectionnés au poste central (10), et
     b) dans un mode de restauration afin de permettre la sélection par l'utilisateur de fichiers à restaurer depuis la sauvegarde, pour demander et recevoir les fichiers sélectionnés à restaurer du poste central (10) et pour actualiser le répertoire de fichiers du système d'exploitation par un article correspondant à chaque fichier restauré; et
   - le poste central (10) est agencé pour stocker les fichiers qui lui sont transmis dans la mémoire de grande capacité (14) et pour retourner les fichiers sélectionnés lorsqu'il en reçoit la demande;

   le poste central (10) comprenant un ordinateur à tâches multiples, caractérisé en ce qu'il est opérationnel (12) pour traiter simultanément les besoins de sauvegarde de fichiers de plusieurs ordinateurs personnels (PC1-3) et pour transférer des fichiers à la mémoire de grande capacité (14) au poste central (10) sous la forme de blocs de données de taille maximale prédéterminée, le poste central (10), lors de la sauvegarde simultanée de fichiers de plusieurs ordinateurs personnels, imbriquant des blocs de fichiers de différents ordinateurs personnels (PC1-3).

2. Communauté d'ordinateurs personnels selon la revendication 1, dans laquelle la mémoire de grande capacité est un dispositif à bande (14), le poste central (10) comprenant en outre une mémoire à disque (13) pour la mémorisation temporaire de blocs de fichiers lors de leur transfert au dispositif à bande (14).

3. Communauté d'ordinateurs personnels selon la revendication 2, dans laquelle, pour chaque ordinateur personnel (PC1-3) nécessitant une sauvegarde, le poste central (10) est opérationnel pour exécuter une tâche de sauvegarde (143) respective pour la réception de blocs de fichiers de cet ordinateur personnel et leur transfert à la mémoire à disques (13); le poste central (10) étant en outre opérationnel pour exécuter un processus de manipulation de bande (142) en vue du transfert de blocs de fichiers de la mémoire à disque (13) au dispositif à bande (14), l'identité des blocs de fichiers à transférer de la mémoire à disque (13) au dispositif à bande (14) étant conservée dans une table de blocs (144b), à la laquelle sont ajoutés des articles lorsque la tâche de sauvegarde (143) transfère des blocs à la mémoire à disque (13) et de laquelle des articles sont supprimés lors du transfert de blocs de la mémoire à disque (13) au dispositif à bande (14).

4. Communauté d'ordinateurs personnels selon la revendication 3, dans laquelle le processus de manipulation de bande (142) est agencé pour différer le transfert de blocs de fichiers contenus dans la mémoire à disque (13) au dispositif à bande (14) jusqu'à ce qu'une quantité minimale de données soit prête à être transférée, le processus de manipulation de bande (142) déterminant la quantité de données à transférer au dispositif à bande (14) en consultant la table de blocs (144b).

5. Communauté d'ordinateurs personnels selon la revendication 2, dans laquelle, pour chaque ordinateur personnel (PC1-3), un répertoire de sauvegarde (30-33) de fichiers sauvegardés provenant de cet ordinateur (PC1-3) est maintenu dans la communauté, ce répertoire de sauvegarde (30-33) contenant de l'information indiquant la relation entre chaque bloc d'un fichier sauvegardé et sa position sur le support d'enregistrement du dispositif à bande (14).

6. Communauté d'ordinateurs personnels selon la revendication 2, dans laquelle le poste central (10) est agencé pour traiter la restauration de fichiers à seulement un ordinateur personnel (PC1-3) à la fois, les blocs des fichiers sélectionnés pour la restauration étant lus sur le dispositif à bande (14) dans l'ordre où ils apparaissent sur la bande (14), de manière à faciliter le processus de lecture de la bande.

7. Communauté d'ordinateurs personnels selon les revendications 5 et 6 prises ensemble, dans laquelle l'ordre d'apparition sur la bande (14) des blocs de fichiers à restaurer est déterminé, au moment de la restauration, par la consultation du répertoire de sauvegarde concerné, contenant l'information relative à la position des blocs de fichiers sur la bande.

8. Communauté d'ordinateurs personnels selon la revendication 2, dans laquelle, pour chaque ordinateur personnel (PC1-3), un répertoire de sauvegarde (30-33) de fichiers sauvegardés provenant de cet ordinateur personnel (PC1-3) est maintenu dans cette communauté, l'agencement étant tel que lorsqu'il est dans son mode de restauration, chaque ordinateur personnel (PC1-3) a son répertoire de sauvegarde (30-33) présent et est opérationnel pour afficher le contenu de ce répertoire en vue de la sélection par l'utilisateur.

9. Communauté d'ordinateurs personnels selon la revendication 2, dans laquelle, pour chaque ordinateur personnel (PC1-3), un répertoire de sauvegarde (30-33) de fichiers sauvegardés provenant de cet ordinateur personnel (PC1-3) est maintenu dans la communauté, le répertoire (30-33) pour chaque ordinateur personnel (PC1-3) contenant des données relatives à la version de chaque fichier sauvegardé; l'agencement étant tel que lorsqu'il est dans son mode de sauvegarde, chaque ordinateur personnel (PC1-3) a son répertoire de sauvegarde (30-33) présent et est opérationnel pour comparer l'information sur les fichiers du système d'exploitation sélectionnés pour être sauvegardés avec l'information contenue dans le répertoire de sauvegarde, et pour sauvegarder seulement les fichiers qui, soit n'apparaissent pas dans le répertoire de sauvegarde (30-33), soit ont des données de version différentes.

10. Communauté d'ordinateurs personnels selon la revendication 8 ou 9, dans laquelle le poste central (10) est agencé pour conserver les répertoires de sauvegarde (30-33) dans la mémoire à disque (13), le poste central (10) étant agencé en outre pour transmettre une copie du répertoire de sauvegarde (30-33) se rapportant à un ordinateur personnel (PC1-3) particulier à cet ordinateur personnel (PC1-3) lorsqu'il en reçoit la demande de celui-ci, et chaque ordinateur personnel (PC1-3) étant opérationnel pour demander au poste central (10) de lui faire parvenir le répertoire de sauvegarde (30-33) se rapportant à lui au cas où ce répertoire n'est pas présent dans l'ordinateur personnel lorsqu'il doit fonctionner dans le mode nécessitant la présence de son répertoire de sauvegarde (30-33).

11. Communauté d'ordinateurs personnels selon la revendication 10, dans laquelle la demande émanant d'un ordinateur personnel (PC1-3) pour une copie de son répertoire de sauvegarde (30-33) est traitée par le poste central (10) avec priorité par rapport à toutes opérations de sauvegarde ou de restauration éventuellement en cours.

## Patentansprüche

1. Eine Personal-Computer-Gemeinschaft mit einer Mehrzahl von unabhängig betreibbaren Personal-Computern (PC 1-3), einer Zentralstation (10) und einer Übertragungsanordnung (11) für die Datenübertragung zwischen jedem Personal-Computer (PC 1-3) und der Zentralstation (10), wobei jeder Personal-Computer (PC 1-3) angeordnet ist, um unter einem auf einer Datei basierenden Betriebssystem zum Speichern und Wiedergewinnen von Arbeitsdateien von einem nicht-flüchtigen Speicherbereich (16), der dem Personal-Computer zugeordnet ist, betrieben zu werden, wobei das Betriebssystem ein Verzeichnis der Dateien aufrechterhält und wobei zur Schaffung einer Dateisicherungsmöglichkeit für die Personal-Computer folgendes vorgesehen ist:

- die Zentralstation (10) hat ein Massenspeichergerät (14),
- jeder Personal-Computer (PC 1-3) ist betreibbar
  a) in einer Sicherungsbetriebsart, um eine Anwenderauswahl von Dateien für die Sicherung und für die Übertragung der ausgewählten Dateien zu der Zentralstation (10) zu ermöglichen, und
  b) in einer Umspeicherbetriebsart, um eine Anwenderauswahl von Dateien für eine Umspeicherung von der Sicherung zu ermöglichen, um die für die Umspeicherung ausgewählten Dateien von der Zentralstation (10) anzufordern und zu empfangen, und um das Betriebssystem-Dateiverzeichnis mit einem Eingang entsprechend einer jeden umgespeicherten Datei auf den neuesten Stand zu bringen; und

- die Zentraleinheit (10) ist angeordnet, um die zu dieser übertragenen Dateien in dem Massenspeichergerät (14) zu speichern und um ausgewählte Dateien bei Anforderung zurückzuschicken;

wobei die Zentralstation (10) einen Parallelverarbeitungs-Computer aufweist, dadurch gekennzeichnet, daß dieser betreibbar (12) ist, um die Dateisicherungsanforderungen der mehreren Personal-Computer (PC 1-3) gleichzeitig zu handhaben und um die Dateien zu dem Massenspeichergerät (14) in der Zentralstation (10) in der Form von Blöcken von Daten von vorbestimmter maximaler Größe zu übertragen, wobei die Zentralstation (10) bei der gleichzeitigen Rücksicherung für verschiedene Personal-Computer Blöcke der Dateien von unterschiedlichen Personal-Computern (PC 1-3) verschachtelt.

2. Eine Personal-Computer-Gemeinschaft gemäß Anspruch 1, bei der das Massenspeichergerät ein Bandgerät (14) ist, wobei die Zentralstation (10) ferner ein Plattenspeichergerät (13) zum Puffern der Dateiblockübertragung zu dem Bandgerät (14) umfaßt.

3. Eine Personal-Computer-Gemeinschaft gemäß Anspruch 2, bei der die Zentralstation (10) für jeden Personal-Computer (PC 1-3), der eine Sicherung erfordert, betreibbar ist, um eine jeweilige Sicherungsanforderung (143) zum Empfangen von Dateiblöcken von dem Personal-Computer und zum Übertragen derselben zu dem Plattenspeichergerät (13) zu bearbeiten, wobei die Zentralstation (10) ferner betreibbar ist, um einen Bandhandhabungsprozeß (142) zum Übertragen von Dateiblöcken von dem Plattenspeichergerät (13) zu dem Bandgerät (14) zu verarbeiten, wobei die Identität der Dateiblöcke, die von dem Plattengerät (13) zu dem Bandgerät (14) zu übertragen sind, in einer Blocktabelle (144B) gehalten wird, zu der Eingänge zugefügt werden, wenn die Sicherungsanforderung (143) Blöcke zu dem Plattengerät (13) überträgt und von der Eingänge beseitigt werden, wenn die Blöcke von dem Plattengerät (13) zu dem Bandgerät (14) übertragen werden.

4. Eine Personal-Computer-Gemeinschaft gemäß Anspruch 3, bei der der Bandhandhabungsprozeß (142) angeordnet ist, um eine Übertragung von Dateiblöcken, die auf dem Plattengerät (13) gespeichert sind, zu dem Bandgerät (14) zu verzögern, bis eine minimale Datenmenge für die Übertragung bereitsteht, wobei der Bandhandhabungsprozeß (142) die zu übertragende Datenmenge zu dem Bandgerät (14) durch Bezugnahme auf die Blocktabelle (144B) sicherstellt.

5. Eine Personal-Computer-Gemeinschaft gemäß Anspruch 2, bei der für jeden Personal-Computer (PC 1-3) ein Sicherungsverzeichnis (30-33) der von dem Computer (PC 1-3) gesicherten Dateien innerhalb der Gemeinschaft aufrechterhalten wird, wobei das Sicherungsverzeichnis (30-33) Informationen bezüglich jedes Dateiblockes einer gesicherten Datei bezüglich ihrer Lage auf dem Bandspeichermedium des Gerätes (14) umfaßt.

6. Eine Personal-Computer-Gemeinschaft gemäß Anspruch 2, bei der die Zentralstation (10) angeordnet ist, um eine Dateiumspeicherung zu einem einzigen Personal-Computer (PC 1-3) zu einem Zeitpunkt zu handhaben, wobei die Dateiblöcke der ausgewählten Dateien für die Umspeicherung von dem Bandgerät (14) in der Reihenfolge ausgelesen werden, in der sie auf dem Band (14) auftreten, um dadurch den Bandausleseprozeß zu erleichtern.

7. Eine Personal-Computer-Gemeinschaft gemäß Anspruch 5 und 6 in Kombination miteinander, bei der die Reihenfolge des Auftretens der umzuspeichernden Dateiblöcke auf dem Band (14) zu dem Zeitpunkt der Umspeicherung durch Bezugnahme auf das relevante Sicherungsverzeichnis ermittelt wird, welches Informationen über die Bandlage der Dateiblöcke enthält.

8. Eine Personal-Computer-Gemeinschaft gemäß Anspruch 2, bei dem innerhalb der Gemeinschaft für jeden Personal-Computer (PC 1-3) ein Sicherungsverzeichnis (30-33) der von diesem Personal-Computer (PC 1-3) gesicherten Dateien aufrechterhalten wird, wobei die Anordnung derartig ist, daß jeder Personal-Computer (PC 1-3) bei seiner Umspeicherungsbetriebsweise sein Sicherungsverzeichnis (30-33) vorliegen hat und betätigbar ist, um die Inhalte desselben für den Anwender zur Auswahl anzuzeigen.

9. Eine Personal-Computer-Gemeinschaft gemäß Anspruch 2, bei der für jeden Personal-Computer (PC 1-3) ein Sicherungsverzeichnis (30-33) von Dateien, welche von diesem Personal-Computer (PC 1-3) gesichert sind, innerhalb der Gemeinschaft aufrechterhalten wird, wobei das Verzeichnis (30-33) für jeden Personal-Computer (PC 1-3) für jede gesicherte Datei Daten bezüglich der Version aufweist; wobei die Anordnung derartig ist, daß jeder Personal-Computer (PC 1-3) während seiner Sicherungsbetriebsart sein Sicherungsverzeichnis (30-33) vorliegen hat und betätigbar ist, um Informationen auf Betriebssystem-Dateien, welche zur Sicherung ausgewählt sind, mit Informationen in dem Sicherungsverzeichnis (30-33) zu vergleichen und um lediglich solche Dateien zu sichern, die entweder nicht in der Sicherungsdatei (30-33) erscheinen oder abweichende Daten bezüglich der Version haben.

10. Eine Personal-Computer-Gemeinschaft gemäß Anspruch 8 oder 9, bei der die Zentralstation (10) angeordnet ist, um die Sicherungsverzeichnisse (30-33) auf dem Plattengerät (13) zu halten, wobei die Zentralstation (10) ferner angeordnet ist, um eine Kopie des Sicherungsverzeichnisses (30-33), das für einen speziellen Personal-Computer (PC 1-3) relevant ist, zu diesem Personal-Computer (PC 1-3) auf dessen Anforderung hin weiterzuleiten, und daß jeder Personal-Computer (PC 1-3) für eine Anforderung an die Zentralstation (10) betätigbar ist, so daß diese das relevante Sicherungsverzeichnis (30-33) weiterleitet, wo das letztgenannte nicht in dem Personal-Computer gegenwärtig ist und wo dieser in der Betriebsart zu betätigen ist, die das Vorliegen seines Sicherungsverzeichnisses (30-33) erfordert.

11. Eine Personal-Computer-Gemeinschaft gemäß Anspruch 10, bei der die Anforderung von einem Personal-Computer (PC 1-3) für eine Kopie seines Sicherungsverzeichnisses (30-33) durch die Zentralstation (10) prioritätsmäßig bevorzugt gegenüber jeglichen momentanen Sicherungsoder Umspeicherungs-Operationen behandelt wird.

MENU:

1. SELECTIVE BACKUP
2. BACKUP ALL
3. SELECTIVE RESTORE
4. SET 'BACKUP ALL' LIST

18

15          16

26    24    22

COMMS    DISP. CONTR.    ROM

23                                         DISC DEVICE

I/O    C.P.U.    RAM

25    20    21

KEYBOARD    17

PC 3

REQUESTOR PROGRAM    BACK UP DIR.

P.C. OPERATING SYSTEM    O.S. FILE DIR.

PC 2    PC 1

11

10

DISC DEVICE    (MINI) COMPUTER    TAPE DEVICE

13    12    14

CENTRAL STATION

SERVER PROGRAM

MULTI-TASKING OPERATING SYSTEM

DRIVE A:

## FIG 2

ROOT
DIR.

FILES
F1

SUB. DIR.
D1

SUB. DIR.
D2

FILES
F2

SUB. DIR.
D3

SUB. DIR.
D4

FILES
F3

FILES
F4

FILES
F5

SUB. DIR.
D5

FILES
F6

## FIG 5

SELECTION

PATH
LIST

FILE
LIST

60

61

| FULL PATH |
| FILE POINTER |
| INCLUDE / EXCLUDE |
| NEXT ENTRY POINTER |

| FILE NAME |
| PATH POINTER |
| INCLUDE / EXCLUDE |
| VERSION DATA |
| VERSION STATUS |
| NEXT ENTRY POINTER |

| FILE NAME |
| ETC. |

| FULL PATH |
| FILE POINTER |
| INCLUDE / EXCLUDE |

| FILE NAME |
| ETC. |

# FIG 3

PATH LIST

| FULL PATH |
| FILE POINTER |
| NEXT ENTRY POINTER |

30

FILE LIST

| FILE NAME |
| PATH POINTER |
| VERSIONS POINTER |
| NEXT ENTRY POINTER |

31

| FILE NAME |
| PATH POINTER |
| VERSIONS POINTER |
| NEXT ENTRY POINTER |

31

VERSIONS LIST

| FILE POINTER |
| BLOCK MAP POINTER |
| VERSION ID DATA |
| VERSION STATUS |
| NEXT ENTRY POINTER |

32

| FILE POINTER |
| ETC. |

| FILE POINTER |
| ETC. |

32

| FILE POINTER |
| ETC. |

BLOCK MAP LIST

| BLOCK ID |
| TAPE POS. DATA |
| SIZE |
| NEXT ENTRY |

| BLOCK ID |
| TAPE POS. DATA |
| SIZE |
| NEXT ENTRY |

33

| BLOCK ID |
| ETC. |

| BLOCK ID |
| ETC. |

33

| BLOCK ID |
| ETC |

| BLOCK ID |
| ETC. |

33

| BLOCK ID |
| ETC. |

| BLOCK ID |
| ETC. |

33

| FULL PATH |

| FULL NAME |

| FILE POINTER |

| BLOCK ID |

| BLOCK ID |

FIG 4

START

40 — DISPLAY ROOT DIR.

DISPLAY SELECTED DIR.

45

41

USER SELECTION

| 44 "DISPLAY INDICATED SUB. DIR." | 46 "DISPLAY PARENT DIR." | 54 "DISPLAY VERSIONS OF INDICATED FILE" | 53 "PROCEED" | 42 "CURSOR MOVEMENT" | 50 "TOGGLE INDICATED FILE / SUB. DIR." | 47 "TOGGLE DISPLAYED DIR." |

55 — DISPLAY VERSIONS

56 USER SELECTION

| 57 "CURSOR MOVEMENT" | 58 "TOGGLE INDICATED VERSION" | 59 "RE DISPLAY CURRENT DIR." |

MOVE CURSOR

UPDATE SELECTION LIST

UPDATE HIGH-LIGHTING

43 MOVE CURSOR

51 UPDATE SELECTION LIST

52 UPDATE HIGH-LIGHTING

48 UPDATE SELECTION LIST

49 UPDATE HIGH-LIGHTING

EXIT

26

FIG 6

START

62 — SEARCH PATH LIST FOR DIR. ENTRY

63 — FOUND?

N. → CREATE ENTRY FOR DIR. IN PATH LIST — 64

Y. → 66 — REMOVE ALL CURRENT CHILD FILES

67 — REMOVE ALL CURRENT CHILD FILES OF SUB-DIRS.

68 — DEL ENTRIES OF SUB-DIRS WITH EMPTY FILELIST

69 — CHANGE MARK ON DIR. ENTRY

IS MARK SAME AS NEAREST ANCESTOR ? — 70

MARK ENTRY OPPOSITE TO NEAREST ANCESTOR — 65

Y → 71 — IS DIR. FILE LIST EMPTY ?

N. →

Y → 72 — REMOVE DIR. PATHLIST ENTRY

EXIT

FIG 7

START

73 — SEARCH PATH LIST
FOR PARENT DIR.

74 — FOUND?

75 — CREATE ENTRY FOR
PARENT DIR. IN PATH
LIST AND MARK SAME
AS NEAREST ANCESTOR

80 — SEARCH FILE LIST
FOR FILE

81 — FOUND?

76 — CREATE FILE LIST
ENTRY FOR FILE

77 — CURRENT
FILE?

82 — REMOVE
FILE ENTRY

79 — MARK AS SELECTED

78 — MARK ENTRY OPPOSITE
TO PARENT DIR.

EXIT

FIG 8

```
                    ( START )
                        │
                        │
        84 ─┐  ┌─────────────────────┐
            └──│    SEARCH PATH       │
               │ LIST FOR PARENT DIR. │
               └─────────────────────┘
                        │
                        │
        85 ─┐         ◇ FOUND? ◇──── Y ───────────────┐
            └───────   ◇      ◇                        │
                        │ N                             │
                        │                               │
        86 ─┐  ┌─────────────────────┐   ┌──────────────────────┐
            └──│  SEARCH PATH LIST    │   │   SEARCH FILE LIST    │─ 88
               │ FOR NEAREST ANCESTOR DIR. │   FOR FILE           │
               └─────────────────────┘   └──────────────────────┘
                        │                               │
                        │                         89 ─┐ │
        87 ─┐  ┌────────────────┐            ◇ FOUND? ◇
            └──│ RETURN MARK OF │      N ──── ◇      ◇
               │ NEAREST ANCESTOR│            │       │
               └────────────────┘            │       │ Y
                        │                     │       │
                        │        ┌────────┐  ┌──────────┐
                  91 ─┐ │        │ RETURN │  │  RETURN  │─ 90
                      └─│        │DIR. MARK│  │ FILE MARK│
                        │        └────────┘  └──────────┘
                        │             │           │
                        └─────────────┴───────────┘
                        │
                    ( EXIT )
```

FIG 9

FIG 10

FIG 11

FIG 12

140 — MONITOR PROCESS

141 — SCHEDULER PROCESS

TASK CREATION

CHECK IN/OUT

BACKUP / RESTORE TASK

VIRTUAL CCT REQUESTER PC

REQUESTS / ACK

TASK BLOCK TABLE — 144A

143 —

TASK

DISC

13

TAPE HANDLER PROCESS — 142

TH BLOCK TABLE — 144 B

145

USER STATUS LIST

TAPE

14

FIG 13

READ TASK MSG. — 150

CHECK IN/OUT — 151

IN

RESTORE CURRENT ? — 154

Y

N

BACK UP OR RESTORE — 155

BKP

NO. OF TASKS LIMIT ? — 153

Y

N

RST — 156

ABORT ANY CURRENT BACK UP TASKS

160 — UPDATE CURRENT TASKS

157 — UPDATE CURRENT TASKS

158 — GRANT REQUEST

159 — RETURN DELAY

FIG 14

161 — BACK UP / RESTORE TASK CREATION

162 — RECEIVE DATA FROM MONITOR & REQUESTER

163 — CHECK IN WITH SCHEDULER

164 — DELAY?

165 — REPORT DELAY

169 — ACCESS TAPE REQUEST

170 — RETURN ACK. TO REQUESTER

171 — READ NEXT MESSAGE

172 — FROM REQUESTER OR TAPE HANDLER

REQUESTER — ROUTINE 1

TAPE HANDLER — ROUTINE 2

173 — EOT ACKNOWLEDGED?

166 — CLOSE LINK

167 — CHECK OUT WITH SCHEDULER

168 — DIES

# FIG 15

START
READ NEXT MSG — 175

176 — MSG TYPE

BACK UP REQUEST / RESTORE REQUEST / ABORT / DIR REQUEST / ACCESS REQUEST

186 — CONTENT TYPE
EOT / DATA / EOD

205 — SET USER INACTIVE
ACK. EOT — 206

197 — SET USER COMPLETE

198 — BLOCKS LEFT?
N / Y

187 — UPDATE BLOCK DATA

ANY NON-INACTIVE USERS
Y — 207 / N — 208

SET MODE N.O.P.

199 — ANY ACTIVE USERS
Y / N

188 — STREAM-ABLE?
N / Y

189 — WRITE TO TAPE RETURN TAPE POS & BLOCK ACK-UPDATE BLK DATA

190 — USER COMPLETE & NO BLOCKS
N / Y

191 — ACK EOD SET USER ACK

230 — SET USER INACTIVE

231 — ANY NON-INACTIVE USER
Y / N

232 — SET NOP MODE

178 — N.O.P. MODE?
Y 177

SET MODE TO THAT OF REQ

179 — SET USER ACTIVE

180 — ACK. REQ

181 — ACK. REQ.

233 — BACK UP / RESTORE DIR TO / FROM DISC

214 — UPDATE BLOCK DATA

213 — CONTENTS TYPE
DATA / EOT / EOD

216 — SET USER COMPLETE

217 — READ OFF REQUESTED BLKS TO RESTORE TASK UPDATE BLK DATA

221 — ACK EOD

222 — SET USER ACK

224 — SET USER INACTIVE
ACK EOT — 225

226 — SET MODE N.O.P.

TO BLK 175

EP 0 259 912 B1

EP 0 259 912 B1

START
BACKUP-TASK
ROUTINE 1

EOD / EOT — CONTENTS TYPE — DIR DATA

182

FILE DATA

183 — SPOOL DATA TO TEMP DISC FILE

201 — SPOOL DATA TO TEMP DISC FILE

184 — UP DATE BLOCK TABLE

185 — NOTIFY TAPE HANDLER IN BACKUP REQ. MSG.

202 — REQUEST T.H. TO SAVE DIR DATA TO USER DISC FILE

196 — PASS TO TAPE HANDLER IN BACKUP REQ. MSG.

EXIT

FIG 16A

START
BACKUP - TASK
ROUTINE 2

192

EOD / EOT ACK — CONTENTS TYPE — DIR ACK

FILE — DATA ACK

193 — PASS ON BLK ACK TO REQUESTER

194 — DELETE BLOCK FROM DISC

195 — UPDATE BLOCK TABLE

200 — PASS ON ACK. TO REQUESTER

203 — PASS ON ACK. TO REQUESTER

EXIT

FIG 16B

FIG 17A

FIG 17B

EP 0 259 912 B1